(19) **Europäisches Patentamt / European Patent Office / Office européen des brevets**

(11) **EP 4 765 972 A1**

(12) # EUROPEAN PATENT APPLICATION
published in accordance with Art. 153(4) EPC

(43) Date of publication:
**24.06.2026 Bulletin 2026/26**

(21) Application number: **23949144.2**

(22) Date of filing: **14.08.2023**

(51) International Patent Classification (IPC):
*H04W 72/02* (2009.01)  *H04W 24/10* (2009.01)
*H04W 72/40* (2023.01)  *H04W 84/06* (2009.01)
*H04W 92/18* (2009.01)

(52) Cooperative Patent Classification (CPC):
**H04W 24/10; H04W 72/02; H04W 72/40;
H04W 84/06; H04W 92/18**

(86) International application number:
**PCT/JP2023/029477**

(87) International publication number:
**WO 2025/037374 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.
Tokyo 100-6150 (JP)**

(72) Inventors:
• **YOSHIOKA Shohei
  Tokyo 100-6150 (JP)**
• **SHICHIJO Taichi
  Tokyo 100-6150 (JP)**
• **NAGATA Satoshi
  Tokyo 100-6150 (JP)**

(74) Representative: **Hoffmann Eitle
Patent- und Rechtsanwälte PartmbB
Arabellastraße 30
81925 München (DE)**

(54) **TERMINAL, BASE STATION, WIRELESS COMMUNICATION SYSTEM, AND WIRELESS COMMUNICATION METHOD**

(57) A terminal comprises: a communication unit that executes transmission of an uplink signal to a specific cell belonging to a non-terrestrial network and sidelink communication; and a control unit that executes specific control regarding the transmission of the uplink signal and the sidelink communication when autonomously selecting resources for the sidelink communication

FIG. 4

**Description**

TECHNICAL FIELD

The present disclosure relates to a terminal, a base station, a radio communication system, and a radio communication method supporting sidelink communication assuming NTN.

BACKGROUND ART

The 3rd Generation Partnership Project (3GPP) has specified the 5th generation mobile communication system (also referred to as 5G, New Radio (NR), or Next Generation (NG)), and is also proceeding with the specification of the next generation called Beyond 5G, 5G Evolution, or 6G.

First, in standards up to 3GPP Release 18, D2D (Device to Device) technology in which terminals perform direct communication with each other without via a base station has been studied. D2D reduces traffic between a terminal and a base station, and enables communication between terminals even when a base station becomes unable to communicate such as during a disaster. Note that D2D may be referred to as sidelink or sidelink communication (for example, Non-Patent Literature 1).

Second, in standards up to 3GPP Release 18, NTN (Non-Terrestrial Network) has been studied. In NTN, by using a non-terrestrial network such as an artificial satellite (hereinafter, satellite), a service is provided to an area that cannot be covered by a terrestrial network (hereinafter, TN; Terrestrial Network) due to reasons such as cost.

CITATION LIST

NON-PATENT LITERATURE

Non-Patent Literature 1: 3GPP TS 38.211 V17.3.0 (2022-09)
Non-Patent Literature 2: "Enhanced support of reduced capability NR devices", RP-223544, 3GPP TSG RAN Meeting #98-e, 3GPP, December 12-16, 2022

SUMMARY OF INVENTION

Under the background described above, as a result of intensive studies, the inventors of the present invention focused on the fact that sidelink communication assumes a TN, and found a need to clarify a mechanism for appropriately executing sidelink communication assuming an NTN for reasons such as a cell belonging to an NTN having a wider coverage area than a cell belonging to a TN.

Therefore, the present disclosure has been made to solve the above-described problems, and an object thereof is to provide a terminal, a base station, a radio communication system, and a radio communication method capable of appropriately executing sidelink communication assuming an NTN.

An aspect of the disclosure is a terminal comprising: a communication unit that executes transmission of an uplink signal to a specific cell belonging to a non-terrestrial network and sidelink communication; and a control unit that executes specific control regarding the transmission of the uplink signal and the sidelink communication when autonomously selecting resources for the sidelink communication.

An aspect of the disclosure is a reception unit that receives an uplink signal to a specific cell belonging to a non-terrestrial network; and a control unit that assumes that a terminal executes specific control regarding transmission of the uplink signal and sidelink communication when the terminal autonomously selects resources for the sidelink communication.

An aspect of the disclosure is a radio communication system comprising a terminal and a base station, wherein the terminal comprises: a communication unit that executes transmission of an uplink signal to a specific cell belonging to a non-terrestrial network and sidelink communication; and a control unit that executes specific control regarding the transmission of the uplink signal and the sidelink communication when autonomously selecting resources for the sidelink communication.

An aspect of the disclosure is a radio communication method comprising: a step A of executing transmission of an uplink signal to a specific cell belonging to a non-terrestrial network; a step B of executing sidelink communication; and a step C of executing specific control regarding the transmission of the uplink signal and the sidelink communication when autonomously selecting resources for the sidelink communication.

BRIEF DESCRIPTION OF DRAWINGS

[Fig. 1] Fig. 1 is an overall schematic configuration diagram of a radio communication system 10.

[Fig. 2] Fig. 2 is a diagram showing frequency ranges used in the radio communication system 10.

[Fig. 3] Fig. 3 is a diagram showing configuration examples of a radio frame, a subframe, and a slot used in the radio communication system 10.

[Fig. 4] Fig. 4 is a functional block configuration diagram of a UE 200.

[Fig. 5] Fig. 5 is a functional block configuration diagram of a gNB 100.

[Fig. 6] Fig. 6 is a functional block configuration diagram of an LMF 300.

[Fig. 7] Fig. 7 is a diagram for explaining a protocol in an NTN.

[Fig. 8] Fig. 8 is a diagram for explaining TA in an NTN.

[Fig. 9] Fig. 9 is a sequence chart showing an operation example (1) of V2X.

[Fig. 10] Fig. 10 is a sequence chart showing an operation example (2) of V2X.

[Fig. 11] Fig. 11 is a sequence chart showing an operation example (3) of V2X.

[Fig. 12] Fig. 12 is a sequence chart showing an operation example (4) of V2X.

[Fig. 13] Fig. 13 is a diagram showing an example of a sensing operation.

[Fig. 14] Fig. 14 is a flowchart for explaining an example of a preemption operation.

[Fig. 15] Fig. 15 is a diagram showing an example of a preemption operation.

[Fig. 16] Fig. 16 is a diagram for explaining an example of periodic partial sensing.

[Fig. 17] Fig. 17 is a diagram for explaining an example of contiguous partial sensing.

[Fig. 18] Fig. 18 is a diagram for explaining an operation example 2.

[Fig. 19] Fig. 19 is a diagram for explaining an operation example 2.

[Fig. 20] Fig. 20 is a diagram for explaining an operation example 2.

[Fig. 21] Fig. 21 is a diagram for explaining an operation example 2.

[Fig. 22] Fig. 22 is a diagram for explaining an operation example 2.

[Fig. 23] Fig. 23 is a diagram showing an example of a hardware configuration of the gNB 100 and the UE 200.

[Fig. 24] Fig. 24 is a diagram showing a configuration example of a vehicle 2001.

DESCRIPTION OF EMBODIMENTS

Hereinafter, embodiments will be described with reference to the drawings. Note that the same or similar reference numerals are assigned to the same functions or configurations, and the description thereof will be omitted as appropriate.

[Embodiment]

(1) Overall Schematic Configuration of Radio Communication System

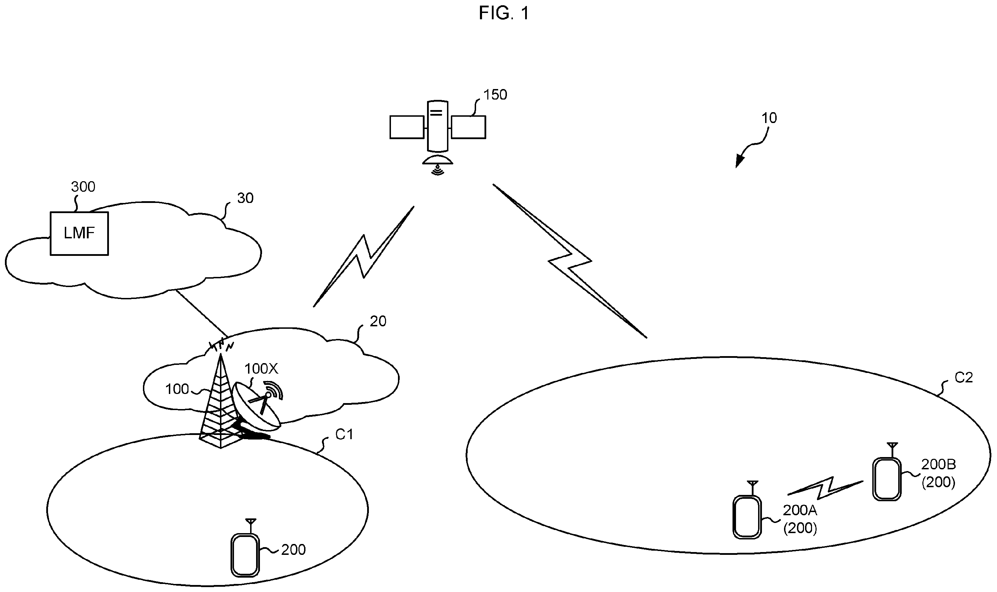

Fig. 1 is an overall schematic configuration diagram of a radio communication system 10 according to an embodiment. The radio communication system 10 is a radio communication system complying with 5G New Radio (NR), and includes a Next Generation-Radio Access Network 20 (hereinafter, NG-RAN 20) and a terminal 200 (hereinafter, UE (User Equipment) 200).

Note that the radio communication system 10 may be a radio communication system complying with a scheme called Beyond 5G, 5G Evolution, or 6G.

The NG-RAN 20 includes a base station 100 (hereinafter, gNB 100). Note that the specific configuration of the radio communication system 10 including the numbers of gNBs 100 and UEs 200 is not limited to the example shown in Fig. 1.

The NG-RAN 20 actually includes a plurality of NG-RAN Nodes, specifically, gNBs (or ng-eNBs), and is connected to a core network 30 (for example, 5GC) complying with 5G. Note that the NG-RAN 20 and the core network 30 may be simply expressed as a "network".

The gNB 100 is a radio base station complying with 5G, and executes radio communication complying with 5G with the UE 200. The gNB 100 and the UE 200 can support Massive MIMO (Multiple-Input Multiple-Output) that generates a beam BM with higher directivity by controlling radio signals transmitted from a plurality of antenna elements, Carrier Aggregation (CA) that bundles and uses a plurality of component carriers (CCs), and Dual Connectivity (DC) that performs communication with two or more transport blocks simultaneously between the UE and each of two NG-RAN Nodes.

The core network 30 includes a network device 300. The network device 300 may include an LMF (Location Management Function). The network device 300 may include an AMF (Access and Mobility management Function). The network device 300 may be an E-SMLC (Evolved Serving Mobile Location Centre). In the following, a case where the network device 300 is the LMF 300 will be mainly described.

In the embodiment, a non-terrestrial network (hereinafter, NTN) may be assumed. In the NTN, by using a non-terrestrial network such as an artificial satellite 150 (hereinafter, satellite 150), a service is provided to an area that cannot be covered by a terrestrial network (hereinafter, TN) due to reasons such as cost. With the NTN, a more reliable service can be supplied. For example, the NTN is assumed to be applied to IoT (Internet of Things), ships, buses, trains, and critical communication. Also, the NTN has scalability by efficient multicast or broadcast.

Note that a network including the gNB 100 and the UE 200 without including the satellite 150 may be referred to as a terrestrial network (TN) in the sense of contrasting with the NTN.

The gNB 100 has an NTN gateway 100X. The NTN gateway 100X transmits a downlink signal to the satellite 150. The NTN gateway 100X receives an uplink signal from the satellite 150. The gNB 100 has a cell C1 as a coverage area.

The satellite 150 relays a downlink signal received from the NTN gateway 100X to the UE 200. The satellite 150 relays an uplink signal received from the UE 200 to the NTN gateway 100X. The satellite 150 has a cell C2 as a coverage area. The satellite 150 may be considered to be a TRP (Transmission-Reception Point).

In the embodiment, D2D (Device to Device) in which UEs 200 (for example, UE 200A and UE 200B) perform direct communication with each other without via the gNB 100 may be assumed. D2D may be referred to as sidelink or sidelink communication. D2D may include V2X (Vehicle to Everything) or eV2X (enhanced V2X). V2X is a part of ITS (Intelligent Transport Systems), and may be a collective term for V2V (Vehicle to Vehicle) meaning a communication form performed between vehicles, V2I (Vehicle to Infrastructure) meaning a communication form performed between a vehicle and a road-side unit (RSU) installed on a roadside, V2N (Vehicle to Network) meaning a communication form performed between a vehicle and an ITS server, and V2P (Vehicle to Pedestrian) meaning a communication form performed between a vehicle and a mobile terminal possessed by a pedestrian.

Note that SL (Sidelink) may be distinguished from UL (Uplink) or DL (Downlink) based on any one or a combination of 1) to 4) below. Also, SL may have another name.

    1) Resource allocation in time domain
    2) Resource allocation in frequency domain
    3) Synchronization signal to be referred to (including SLSS (Sidelink Synchronization Signal))
    4) Reference signal used for pathloss measurement for transmission power control

Regarding SL or UL OFDM (Orthogonal Frequency Division Multiplexing), CP-OFDM (Cyclic-Prefix OFDM), DFT-S-OFDM (Discrete Fourier Transform-Spread-OFDM), OFDM without Transform precoding, or OFDM with Transform precoding may be applied.

A resource allocation method used in SL may include a first method in which resources are allocated by the gNB 100, and a second method in which the UE 200 autonomously selects resources. In the first method, resources for SL communication may be allocated by downlink control information (DCI) transmitted from the gNB 100 to the UE 200. The first method may be referred to as Mode 1 resource allocation, and may be referred to as Mode 3 in LTE. In the second method, the UE 200 may select resources for SL communication from a resource pool (Pre-configured resource pool). The second method may be referred to as Mode 2 resource allocation, and may be referred to as Mode 4 in LTE.

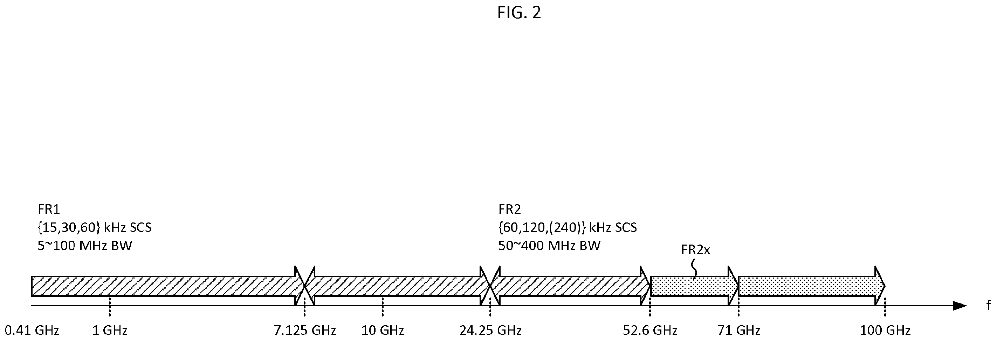

Also, the radio communication system 10 supports a plurality of frequency ranges (FRs). Fig. 2 shows frequency ranges used in the radio communication system 10.

As shown in Fig. 2, the radio communication system 10 supports FR1 and FR2. The frequency band of each FR is as follows.

    ▪ FR1: 410 MHz to 7.125 GHz
    ▪ FR2: 24.25 GHz to 52.6 GHz

In FR1, a Sub-Carrier Spacing (SCS) of 15, 30, or 60 kHz is used, and a bandwidth (BW) of 5 to 100 MHz may be used. FR2 has a higher frequency than FR1, an SCS of 60 or 120 kHz (240 kHz may be included) is used, and a bandwidth (BW) of 50 to 400 MHz may be used.

Note that SCS may be interpreted as numerology. Numerology is defined in 3GPP TS 38.300 and corresponds to one subcarrier spacing in the frequency domain.

Furthermore, the radio communication system 10 also supports a frequency band higher than the frequency band of FR2. Specifically, the radio communication system 10 supports a frequency band exceeding 52.6 GHz and up to 71 GHz or 114.25 GHz. Such a high frequency band may be referred to as "FR2x" for convenience.

In order to solve the problem that the influence of phase noise increases in a high frequency band, when using a band exceeding 52.6 GHz, Cyclic Prefix-Orthogonal Frequency Division Multiplexing (CP-OFDM)/Discrete Fourier Transform-Spread (DFT-S-OFDM) having a larger Sub-Carrier Spacing (SCS) may be applied.

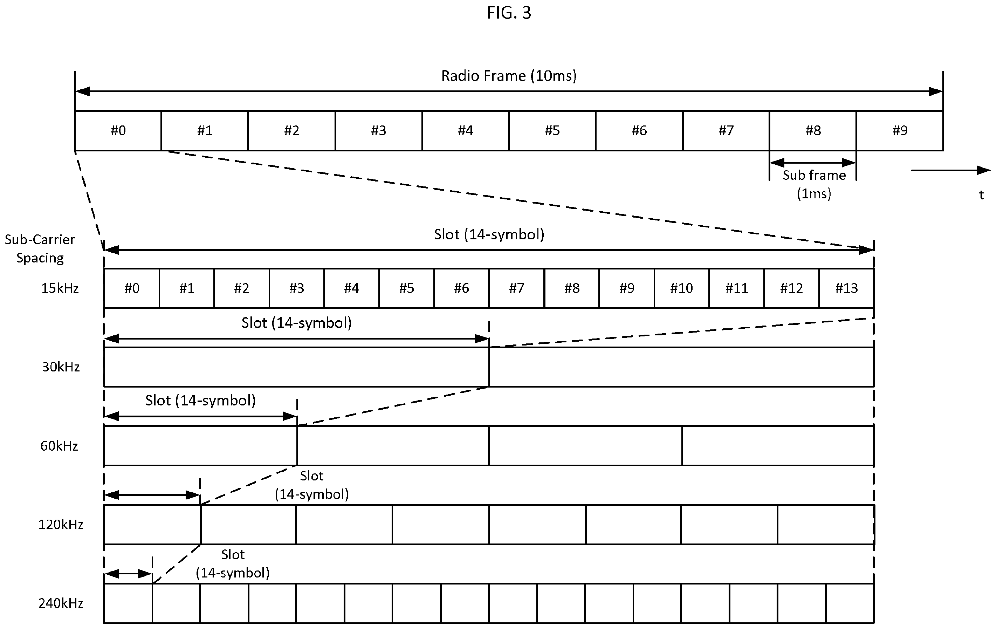

Fig. 3 shows configuration examples of a radio frame, a subframe, and a slot used in the radio communication system 10.

As shown in Fig. 3, one slot is composed of 14 symbols, and the larger (wider) the SCS is, the shorter the symbol period (and slot period) becomes. The SCS is not limited to the spacing (frequency) shown in Fig. 3. For example, 480 kHz, 960 kHz, etc. may be used.

Also, the number of symbols constituting one slot does not necessarily have to be 14 symbols (for example, 28 symbols, 56 symbols). Furthermore, the number of slots per subframe may vary depending on the SCS.

Note that the time direction (t) shown in Fig. 3 may be referred to as a time domain, a symbol period, a symbol time, or the like. Also, the frequency direction may be referred to as a frequency domain, a resource block, a subcarrier, a bandwidth part (BWP: Bandwidth Part), or the like.

DMRS is a type of reference signal and is prepared for various channels. Here, unless otherwise specified, it may mean DMRS for a downlink data channel, specifically, PDSCH (Physical Downlink Shared Channel). However, DMRS for an uplink data channel, specifically, PUSCH (Physical Uplink Shared Channel) may be interpreted in the same manner as DMRS for PDSCH. Alternatively, DMRS may mean DMRS for a sidelink data channel, specifically, PSSCH (Physical Sidelink Shared Channel). Alternatively, it may mean DMRS for a control channel.

DMRS can be used for channel estimation in the UE 200 as part of a device, for example, coherent demodulation. DMRS may be present only in resource blocks (RBs) used for PDSCH transmission.

DMRS may have a plurality of mapping types. Specifically, DMRS has mapping type A and mapping type B. In mapping type A, the first DMRS is arranged in the second or third symbol of a slot. In mapping type A, DMRS may be mapped with reference to a slot boundary regardless of where actual data transmission starts in the slot. The reason why the first DMRS is arranged in the second or third symbol of the slot may be interpreted as being to arrange the first DMRS after a control resource set (CORESET: control resource sets).

In mapping type B, the first DMRS may be arranged in the first symbol of data allocation. That is, the position of DMRS may be given relative to a place where data is arranged, not relative to the slot boundary.

Also, DMRS may have a plurality of types (Types). Specifically, DMRS has Type 1 and Type 2. Type 1 and Type 2 differ in mapping in the frequency domain and the maximum number of orthogonal reference signals. Type 1 can output up to four orthogonal signals with a single-symbol DMRS, and Type 2 can output up to eight orthogonal signals with a double-symbol DMRS.

(2) Functional Block Configuration of Radio Communication System

Next, a functional block configuration of the radio communication system 10 will be described.

First, a functional block configuration of the UE 200 will be described.

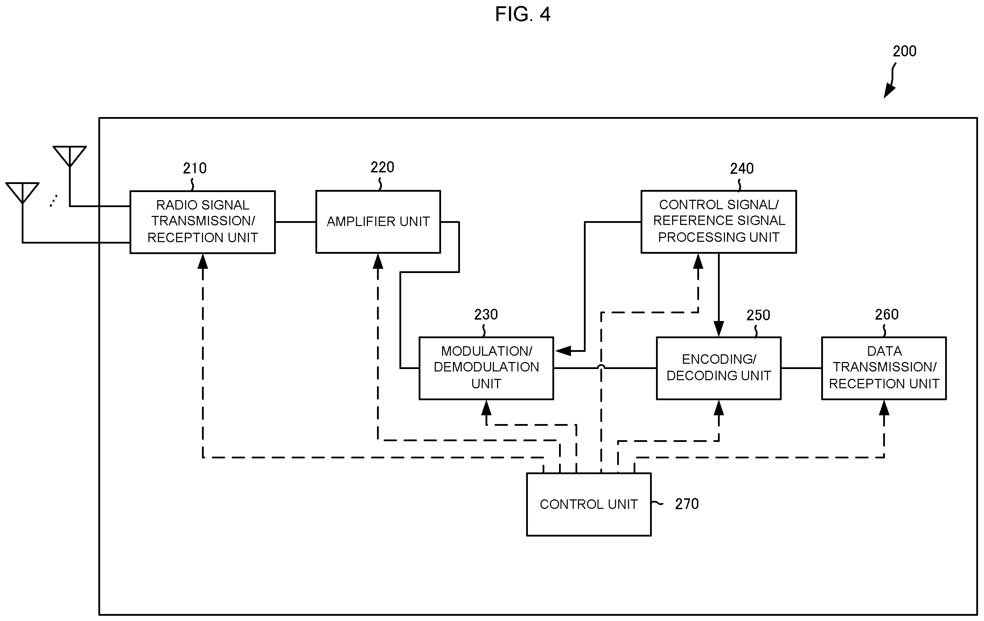

Fig. 4 is a functional block configuration diagram of the UE 200. As shown in Fig. 4, the UE 200 includes a radio signal transmission/reception unit 210, an amplifier unit 220, a modulation/demodulation unit 230, a control signal/reference signal processing unit 240, an encoding/decoding unit 250, a data transmission/reception unit 260, and a control unit 270.

The radio signal transmission/reception unit 210 transmits and receives radio signals complying with NR. The radio signal transmission/reception unit 210 supports Massive MIMO, CA that bundles and uses a plurality of CCs, and DC that performs communication simultaneously between the UE and each of two NG-RAN Nodes.

The amplifier unit 220 is composed of a PA (Power Amplifier)/LNA (Low Noise Amplifier) or the like. The amplifier unit 220 amplifies a signal output from the modulation/demodulation unit 230 to a predetermined power level. Also, the amplifier unit 220 amplifies an RF signal output from the radio signal transmission/reception unit 210.

The modulation/demodulation unit 230 executes data modulation/demodulation, transmission power setting, resource block allocation, and the like for each predetermined communication destination (gNB 100, another gNB, or another UE 200). In the modulation/demodulation unit 230, Cyclic Prefix-Orthogonal Frequency Division Multiplexing (CP-OFDM)/Discrete Fourier Transform-Spread (DFT-S-OFDM) may be applied. Also, DFT-S-OFDM may be used not only for uplink (UL) but also for downlink (DL) or sidelink (SL).

The control signal/reference signal processing unit 240 executes processing regarding various control signals transmitted and received by the UE 200, and processing regarding various reference signals transmitted and received by the UE 200.

Specifically, the control signal/reference signal processing unit 240 receives various control signals transmitted from the gNB 100 or another UE 200 via a predetermined control channel, for example, control signals of a Radio Resource Control Layer (RRC). Also, the control signal/reference signal processing unit 240 transmits various control signals to the gNB 100 or another UE 200 via a predetermined control channel.

The control signal/reference signal processing unit 240 executes processing using reference signals (RS) such as Demodulation Reference Signal (DMRS) and Phase Tracking Reference Signal (PTRS).

DMRS is a known reference signal (pilot signal) between a base station and a terminal specific to the terminal for estimating a fading channel used for data demodulation. PTRS is a reference signal specific to a terminal for the purpose of estimating phase noise which becomes a problem in a high frequency band.

Note that the reference signals may include Channel State Information-Reference Signal (CSI-RS), Sounding Reference Signal (SRS), and Positioning Reference Signal (PRS) for position information, in addition to DMRS and PTRS.

Also, the channels include a control channel and a data channel. The control channels include PDCCH (Physical Downlink Control Channel), PUCCH (Physical Uplink Control Channel), RACH (Random Access Channel), Downlink Control Information (DCI) including Random Access Radio Network Temporary Identifier (RA-RNTI), Physical Broadcast Channel (PBCH), and the like. Also, control channels in sidelink include PSCCH (Physical Sidelink Control Channel), PSDCH (Physical Sidelink Discovery Channel), PSBCH (Physical Sidelink Broadcast Channel), PSFCH (Physical Sidelink Feedback Channel), and the like.

Also, the data channels include PDSCH (Physical Downlink Shared Channel), PUSCH (Physical Uplink Shared Channel), and the like. Data means data transmitted via a data channel. The data channel may be read as a shared channel. Also, data channels in sidelink include PSSCH (Physical Sidelink Shared Channel) and the like.

Here, the control signal/reference signal processing unit 240 may receive downlink control information (DCI). The DCI includes, as existing fields, fields for storing DCI Formats, Carrier indicator (CI), BWP indicator, FDRA (Frequency Domain Resource Assignment), TDRA (Time Domain Resource Assignment), MCS (Modulation and Coding Scheme), HPN (HARQ Process Number), NDI (New Data Indicator), RV (Redundancy Version), and the like. Note that in sidelink, sidelink control information (SCI) may be received, and the DCI described above or described later may be replaced with SCI.

A value stored in the DCI Format field is an information element that designates a format of DCI. A value stored in the CI field is an information element that designates a CC to which the DCI applies. A value stored in the BWP indicator field is an information element that designates a BWP to which the DCI applies. The BWP that can be designated by the BWP indicator is set by an information element (BandwidthPart-Config) included in an RRC message. A value stored in the FDRA field is an information element that designates a frequency domain resource to which the DCI applies. The frequency domain resource is identified by the value stored in the FDRA field and an information element (RA Type) included in an RRC message. A value stored in the TDRA field is an information element that designates a time domain resource to which the DCI applies. The time domain resource is identified by the value stored in the TDRA field and an information element (pdsch-TimeDomainAllocationList, pusch-TimeDomainAllocationList) included in an RRC message. The time domain resource may be identified by the value stored in the TDRA field and a default table. A value stored in the MCS field is an information element that designates an MCS to which the DCI applies. The MCS is identified by the value stored in the MCS and an MCS table. The MCS table may be designated by an RRC message, or may be identified by RNTI scrambling. A value stored in the HPN field is an information element that designates a HARQ Process to which the DCI applies. A value stored in the NDI is an information element for identifying whether data to which the DCI applies is initial transmission data. A value stored in the RV field is an information element that designates redundancy of data to which the DCI applies.

The encoding/decoding unit 250 executes division/concatenation of data, channel coding/decoding, and the like for each predetermined communication destination (gNB 100, another gNB, or another UE 200).

Specifically, the encoding/decoding unit 250 divides data output from the data transmission/reception unit 260 into a predetermined size, and executes channel coding on the divided data. Also, the encoding/decoding unit 250 decodes data output from the modulation/demodulation unit 230, and concatenates the decoded data.

The data transmission/reception unit 260 executes transmission and reception of Protocol Data Unit (PDU) and Service Data Unit (SDU). Specifically, the data transmission/reception unit 260 executes assembly/disassembly of PDU/SDU and the like in a plurality of layers (Medium Access Control layer (MAC), Radio Link Control layer (RLC), Packet Data Convergence Protocol layer (PDCP), etc.). Also, the data transmission/reception unit 260 executes data error correction and retransmission control based on HARQ (Hybrid Automatic Repeat Request).

The control unit 270 controls each functional block constituting the UE 200. In the embodiment, the control unit 270 may control UL communication and may control SL communication. UL communication is an example of communication of an interface (Uu interface) between the gNB 100 and the UE 200. SL communication is an example of communication of an interface (PC5 interface) between a UE 200 and another UE 200.

Second, a functional block configuration of the gNB 100 will be described.

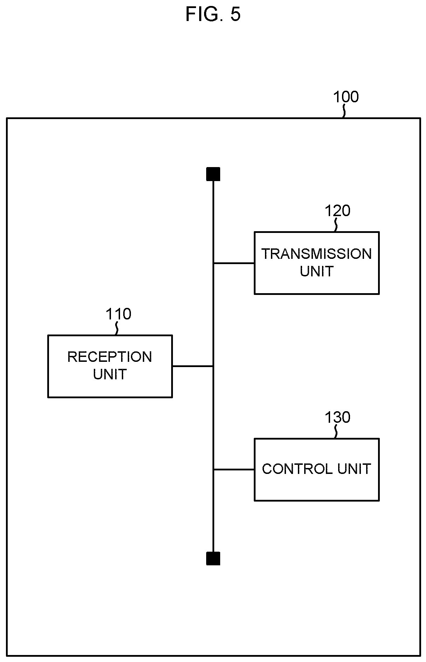

Fig. 5 is a functional block configuration diagram of the gNB 100. As shown in Fig. 5, the gNB 100 includes a reception unit 110, a transmission unit 120, and a control unit 130.

The reception unit 110 receives various signals from the UE 200. The reception unit 110 may receive a UL signal via PUCCH or PUSCH.

The transmission unit 120 transmits various signals to the UE 200. The transmission unit 120 may transmit a DL signal via PDCCH or PDSCH.

The control unit 130 controls the gNB 100. In the embodiment, the control unit 130 may assume that the UE 200 executes SL communication.

Third, a functional block configuration of the LMF 300 will be described.

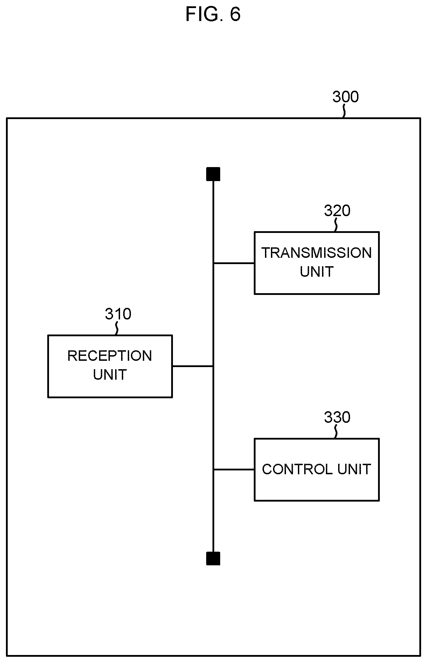

Fig. 6 is a functional block configuration diagram of the LMF 300. As shown in Fig. 6, the LMF 300 includes a reception unit 310, a transmission unit 320, and a control unit 330.

The reception unit 310 may receive various messages from the UE 200. The message may be referred to as LPP Provide Location Information, or may be referred to as an NRPPa (NR Positioning Protocol A) message (Type: Measurement Report). The reception unit 310 may receive various messages from the gNB 100. The message may be referred to as an NRPPa message (Type: POSITIONING INFORMATION REQUEST).

The transmission unit 320 may transmit various messages to the UE 200. The message may be referred to as LPP Provide Assistance Data. The transmission unit 320 may transmit various messages to the gNB 100. The message may be referred to as an NRPPa message (Type: Measurement Request).

The control unit 330 controls the LMF 300. For example, the control unit 330 may execute specific control (Multi-RTT Positioning) for estimating position information of the UE 200 based on UE Rx-Tx time difference. The control unit 330 may execute specific control (DL-TDOA Positioning) for estimating position information of the UE 200 based on DL RSTD (Reference Signal Time Difference).

(3) Overview of NTN

First, a protocol regarding NTN will be described.

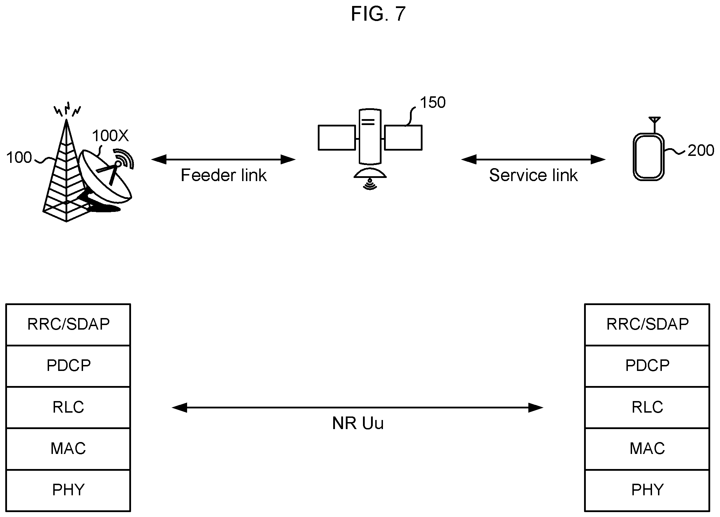

As shown in Fig. 7, the gNB 100 has a protocol stack such as PHY, MAC, RLC, PDCP, and RRC/SDAP. Similarly, the UE 200 has a protocol stack such as PHY, MAC, RLC, PDCP, and RRC/SDAP. The satellite 150 relays communication between the gNB 100 and the UE 200.

Here, a link between the gNB 100 (NTN gateway 100X) and the satellite 150 may be referred to as a Feeder link. A link between the satellite 150 and the UE 200 may be referred to as a Service link. An interface between the gNB 100 and the UE 200 may be referred to as NR Uu.

Note that as an assumption of the network architecture of the NTN, FDD may be adopted, or TDD may be adopted. A terrestrial cell may be fixed or mobile. The UE 200 may have a capability corresponding to GNSS (Global Navigation Satellite System). As the UE 200, a handheld device of power class 3 may be assumed in FR1, and a VSAT (Very small aperture terminal) may be assumed at least in FR2.

The network architecture of the NTN may assume a regenerative payload. For example, the function of the gNB 100 may be mounted on a satellite or an aircraft. Also, a gNB-DU (Distributed Unit) may be mounted on a satellite or an aircraft, and a gNB-CU (Central Unit) may be arranged as a ground station.

Second, TA (Timing Advance) in NTN will be described.

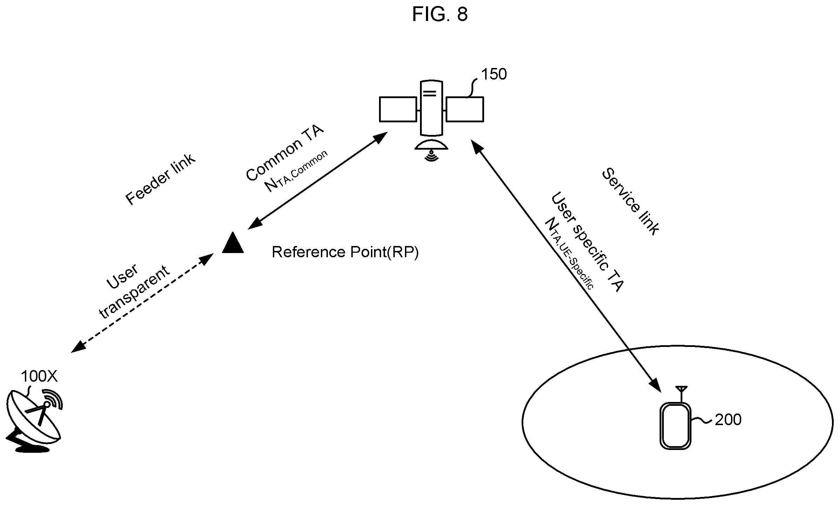

As shown in Fig. 8, Full TA in NTN can be represented by "Full TA = TA of Feeder link + TA of Service link".

The TA of the Feeder link is a value corresponding to the round trip delay (RTT) of the Feeder link, and can be represented by $2 \times$ (User transparent + $N_{TA,common}$). User transparent is a value transparent to the UE 200, and is a value compensated by the network (gNB 100). To simplify the implementation of the gNB 100, the value of User transparent may be a constant. $N_{TA,common}$ is a TA common to the beam or cell of the satellite 150. $N_{TA,common}$ is set with reference to an RP (Reference Point).

The TA of the Service link is a value corresponding to the round trip delay (RTT) of the Service link, and can be represented by $2 \times N_{TA,UE\text{-specific}}$. $N_{TA,UE\text{-specific}}$ is a value specific to the UE 200.

Here, the TA may be represented by the following formula.

$$T_{TA} = (N_{TA} + N_{TA,UE\text{-specific}} + N_{TA,common} + N_{TA,offset}) \times Tc$$

$T_{TA}$: Timing advance between downlink and uplink
$N_{TA}$: Timing advance between downlink and uplink
$N_{TA,UE\text{-specific}}$: UE-derived timing correction
$N_{TA,common}$: Network-controlled timing correction
$N_{TA,offset}$: A fixed offset used to calculate the timing advance
Tc: Basic time unit for NR

$N_{TA}$ is a closed-loop TA. $N_{TA}$ is defined as 0 in a Physical Random Access Channel (PRACH). $N_{TA}$ is updated based on a TA Command field of msg2/msgB and a TA command of a control element of the Medium Access Control layer (MAC CE).

$N_{TA,UE\text{-specific}}$ is an open-loop TA. $N_{TA,UE\text{-specific}}$ is a TA for compensating for a delay in the Service link, and is autonomously updated by the UE 200. $N_{TA,UE-specific}$ is calculated based on position information of the UE 200 and orbit information of the satellite 150. For example, the position information of the UE 200 may be acquired based on a radio signal from a satellite positioning system (not shown).

$N_{TA,common}$ is an open-loop TA. $N_{TA,common}$ is a common TA controlled by the network (gNB 100). $N_{TA,common}$ is autonomously updated by the UE 200 based on a parameter (a parameter for determining the common TA) notified from the gNB 100.

Note that a reference point (RP) defining $N_{TA,common}$ may be set anywhere on the Feeder link. The RP may be set in the gNB 100, may be set in the satellite 150, or may be set between the gNB 100 and the satellite 150. When the RP is set in the gNB 100, there is a merit that the burden on the gNB 100 is reduced. When the RP is set in the satellite 150, there is a merit that $N_{TA,common}$ becomes 0 and the burden on the UE 200 is reduced.

(4) Overview of SL

The UE 200 performing SL communication may be a vehicle, a terminal held by a person, a device in which a communication device is mounted on a drone or an aircraft, a device in which a communication device is a base station, an RSU, a relay station (relay node), a terminal having scheduling capability, or the like, or may be an IoT (Internet of Things) device such as a smart meter.

"Configure" radio parameters or the like may mean that a predetermined value is pre-configured, or may mean that radio parameters notified from the gNB 100 or the UE 200 are configured.

In NR-SL, it is assumed that HARQ (Hybrid automatic repeat request) is supported for sidelink unicast and groupcast. Furthermore, in NR-V2X, SFCI (Sidelink Feedback Control Information) including a HARQ response is defined. Furthermore, SFCI is transmitted via PSFCH (Physical Sidelink Feedback Channel).

Note that in the following description, PSFCH is used for transmission and reception of HARQ-ACK in sidelink, but this is an example. For example, transmission of HARQ-ACK in sidelink may be performed using PSCCH, transmission of HARQ-ACK in sidelink may be performed using PSSCH, or transmission of HARQ-ACK in sidelink may be performed using another channel.

Hereinafter, for convenience, information generally reported by the UE 200 in HARQ is referred to as HARQ-ACK. This HARQ-ACK may be referred to as HARQ-ACK information. More specifically, a codebook applied to the HARQ-ACK information reported from the UE 200 to the gNB 100 or the like is referred to as a HARQ-ACK codebook. The HARQ-ACK codebook defines a bit string of HARQ-ACK information. Note that not only ACK but also NACK is transmitted by "HARQ-ACK".

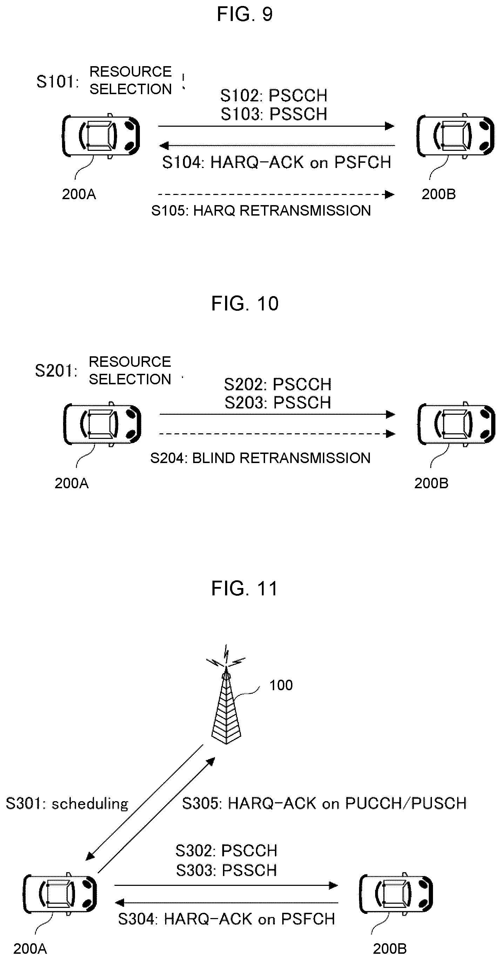

Fig. 9 is a sequence chart showing an operation example (1) of V2X. As shown in Fig. 9, the radio communication system according to the embodiment of the present invention may have a UE 200A and a UE 200B. Note that although a large number of user equipments actually exist, Fig. 9 shows the UE 200A and the UE 200B as an example.

Hereinafter, when the UE 200A, the UE 200B, etc. are not particularly distinguished, they are simply described as "UE 200" or "user equipment". Although Fig. 9 shows a case where both the UE 200A and the UE 200B are within the coverage of the cell as an example, the operation in the embodiment of the present invention can be applied even when the UE 200B is out of the coverage.

Note that the UE 200 does not need to be a device of one housing, and for example, even when various sensors are distributed and arranged in a vehicle, a device including the various sensors may be the UE 200.

Also, the processing content of sidelink transmission data of the UE 200 is basically the same as the processing content of UL transmission in LTE or NR. For example, the UE 200 scrambles and modulates a codeword of transmission data to generate complex-valued symbols, maps the complex-valued symbols (transmission signal) to one or two layers, and performs precoding. Then, the UE 200 maps the precoded complex-valued symbols to resource elements to generate a transmission signal (e.g., complex-valued time-domain SC-FDMA signal), and transmits it from each antenna port.

Note that the gNB 100 has a function of cellular communication as a base station in LTE or NR, and a function for enabling communication of the UE 200 in the present embodiment (e.g., resource pool configuration, resource allocation, etc.). Also, the gNB 100 may be an RSU (gNB type RSU).

Also, in the radio communication system according to the embodiment of the present invention, a signal waveform used by the UE 200 for SL or UL may be OFDMA, SC-FDMA, or other signal waveforms.

As a synchronization signal in SL, the UE 200 transmits a Sidelink Synchronization Signal Block (S-SSB). The S-SSB can include S-PSS (Sidelink Primary Synchronization Signal), S-SSS (Sidelink Secondary Synchronization Signal), and PSBCH (Physical Sidelink Broadcast Channel). Note that the names such as S-SSB, S-PSS, and S-SSS are examples, and names other than S-SSB, S-PSS, and S-SSS may be used.

The UE 200 transmits an S-SSB to another UE 200 based on a signal received from the gNB 100, a GNSS (Global Navigation Satellite System) signal, or a signal received from another UE 200. Note that when the UE 200 cannot transmit an S-SSB based on any of the signals of the gNB 100, GNSS, and another UE 200, the UE 200 may transmit an autonomously determined S-SSB to another UE 200. Resources usable for S-SSB may be periodic slots, and may be referred to as S-SSB occasions.

In step S101, the UE 200A autonomously selects resources to be used for PSCCH and PSSCH from a resource selection window having a predetermined period. The resource selection window may be configured to the UE 200 from the gNB 100. Here, regarding the predetermined period of the resource selection window, the period may be defined by implementation conditions of the terminal such as processing time or packet maximum allowable delay time, the period may be defined in advance by specifications, or the predetermined period may be referred to as a section on the time domain.

In step S102 and step S103, the UE 200A transmits SCI (Sidelink Control Information) via PSCCH and/or PSSCH and transmits SL data via PSSCH using the resources autonomously selected in step S101. For example, the UE 200A may transmit PSCCH using frequency resources adjacent to or not adjacent to frequency resources of PSSCH in the same time resources as at least a part of time resources of PSSCH.

The UE 200B receives the SCI (PSCCH and/or PSSCH) and the SL data (PSSCH) transmitted from the UE 200A. The received SCI may include information on resources of PSFCH for the UE 200B to transmit HARQ-ACK for reception of the data. The UE 200A may include information on the autonomously selected resources in the SCI and transmit it. Note that resources usable for PSFCH may be periodic slots and symbols at the end of the slot (excluding the last symbol), and may be referred to as PSFCH occasions.

In step S104, the UE 200B transmits HARQ-ACK for the received data to the UE 200A using the resources of PSFCH determined from the received SCI.

In step S105, when the HARQ-ACK received in step S104 indicates a request for retransmission, that is, NACK (negative acknowledgment), the UE 200A retransmits PSCCH and PSSCH to the UE 200B. The UE 200A may retransmit PSCCH and PSSCH using autonomously selected resources.

Note that when HARQ control involving HARQ feedback is not executed, step S104 and step S105 do not have to be executed.

Fig. 10 is a sequence chart showing an operation example (2) of V2X. Blind retransmission that does not rely on HARQ control for improving the success rate of transmission or the reach distance may be executed.

In step S201, the UE 200A autonomously selects resources to be used for PSCCH and PSSCH from a resource selection window having a predetermined period. The resource selection window may be configured to the UE 200 from the gNB 100.

In step S202 and step S203, the UE 200A transmits SCI via PSCCH and/or PSSCH and transmits SL data via PSSCH using the resources autonomously selected in step S201. For example, the UE 200A may transmit PSCCH using frequency resources adjacent to frequency resources of PSSCH in the same time resources as at least a part of time resources of PSSCH.

In step S204, the UE 200A retransmits the SCI via PSCCH and/or PSSCH and the SL data via PSSCH to the UE 200B using the resources autonomously selected in step S201. The retransmission in step S204 may be executed a plurality of times.

Note that when the blind retransmission is not executed, step S204 does not have to be executed.

Fig. 11 is a sequence chart showing an operation example (3) of V2X. The gNB 100 may perform scheduling of sidelink. That is, the gNB 100 may determine resources of sidelink used by the UE 200 and transmit information indicating the resources to the UE 200. Furthermore, when HARQ control involving HARQ feedback is applied, the gNB 100 may transmit information indicating resources of PSFCH to the UE 200.

In step S301, the gNB 100 performs SL scheduling by sending DCI (Downlink Control Information) via PDCCH to the UE 200A. Hereinafter, for convenience, DCI for SL scheduling is referred to as SL scheduling DCI.

Also, in step S301, the gNB 100 assumes transmitting DCI for DL scheduling (may be referred to as DL allocation) via PDCCH to the UE 200A. Hereinafter, for convenience, DCI for DL scheduling is referred to as DL scheduling DCI. The UE 200A having received the DL scheduling DCI receives DL data via PDSCH using resources designated by the DL scheduling DCI.

In step S302 and step S303, the UE 200A transmits SCI (Sidelink Control Information) via PSCCH and/or PSSCH and transmits SL data via PSSCH using resources designated by the SL scheduling DCI. Note that in the SL scheduling DCI, only resources of PSSCH may be designated. In this case, for example, the UE 200A may transmit PSCCH using frequency resources adjacent to frequency resources of PSSCH in the same time resources as at least a part of time resources of PSSCH.

The UE 200B receives the SCI (PSCCH and/or PSSCH) and the SL data (PSSCH) transmitted from the UE 200A. The SCI received via PSCCH and/or PSSCH includes information on resources of PSFCH for the UE 200B to transmit HARQ-ACK for reception of the data.

The information on the resources is included in the DL scheduling DCI or the SL scheduling DCI transmitted from the gNB 100 in step S301, and the UE 200A acquires the information on the resources from the DL scheduling DCI or the SL scheduling DCI and includes it in the SCI. Alternatively, the DCI transmitted from the gNB 100 does not include the information on the resources, and the UE 200A may autonomously include the information on the resources in the SCI and transmit it.

In step S304, the UE 200B transmits HARQ-ACK for the received data to the UE 200A using the resources of PSFCH determined from the received SCI.

In step S305, the UE 200A transmits HARQ-ACK, for example, at a timing (for example, timing in slot units) designated by the DL scheduling DCI (or the SL scheduling DCI) using PUCCH (Physical uplink control channel) resources designated by the DL scheduling DCI (or the SL scheduling DCI), and the gNB 100 receives the HARQ-ACK. The codebook of the HARQ-ACK can include HARQ-ACK received from the UE 200B or HARQ-ACK generated based on PSFCH not received, and HARQ-ACK for DL data. However, when there is no allocation of DL data, HARQ-ACK for DL data is not included. In NR Rel. 16, the codebook of the HARQ-ACK does not include HARQ-ACK for DL data.

Note that when HARQ control involving HARQ feedback is not executed, step S304 and/or step S305 does not have to be executed.

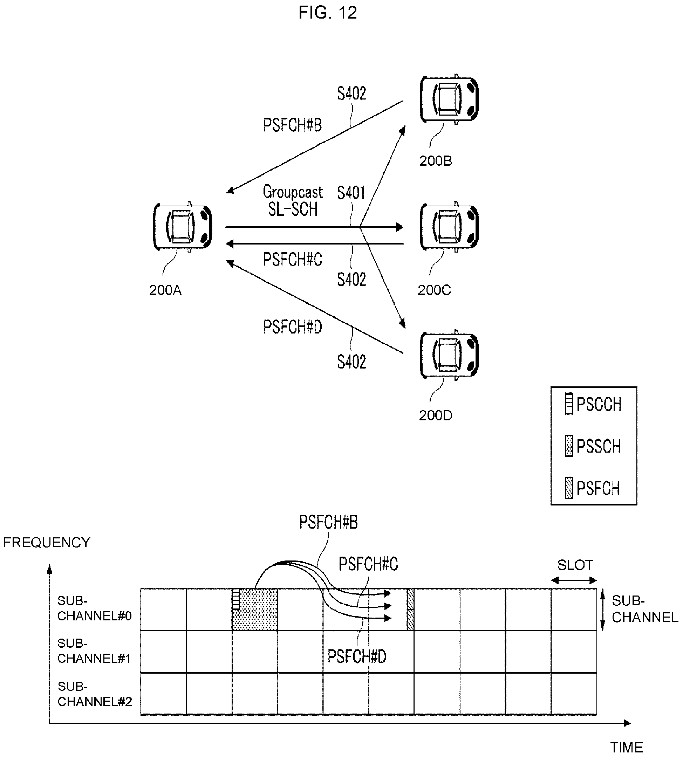

Fig. 12 is a sequence chart showing an operation example (4) of V2X. As described above, in NR sidelink, transmission of a HARQ response via PSFCH is supported. Note that as a format of PSFCH, for example, a format similar to PUCCH (Physical Uplink Control Channel) format 0 can be used. That is, the format of PSFCH may be a sequence-based format in which a PRB (Physical Resource Block) size is 1, and ACK and NACK are identified by a difference in sequence and/or cyclic shift. The format of PSFCH is not limited to this. The resources of PSFCH may be arranged in a symbol at the end of a slot or a plurality of symbols at the end. Also, a period N is configured or defined in advance for the PSFCH resources. The period N may be configured in slot units or defined in advance.

In Fig. 12, the vertical axis corresponds to the frequency domain, and the horizontal axis corresponds to the time domain. PSCCH may be arranged in one symbol at the head of a slot, may be arranged in a plurality of symbols from the head, or may be arranged in a plurality of symbols starting from a symbol other than the head. PSFCH may be arranged in one symbol at the end of a slot, or may be arranged in a plurality of symbols at the end of a slot. Note that regarding the above-mentioned "head of a slot" and "end of a slot", consideration of symbols for AGC (Automatic Gain Control) and symbols for transmission/reception switching may be omitted. That is, for example, when one slot is composed of 14 symbols, "head of a slot" and "end of a slot" may mean the head symbol and the end symbol in 12 symbols excluding the head and end symbols, respectively. In the example shown in Fig. 12, three subchannels are set in the resource pool, and two PSFCHs are arranged three slots after the slot in which PSSCH is arranged. Arrows from PSSCH to PSFCH indicate examples of PSFCH associated with PSSCH.

When a HARQ response in NR-V2X groupcast is groupcast option 2 transmitting ACK or NACK, it is necessary to determine resources used for transmission and reception of PSFCH. As shown in Fig. 12, in step S401, the UE 200A which is a transmitting side UE 200 executes groupcast to the UE 200B, the UE 200C, and the UE 200D which are receiving side UEs 200 via SL-SCH (Sidelink Shared Channel). In subsequent step S402, the UE 200B uses PSFCH#B, the UE 200C uses PSFCH#C, and the UE 200D uses PSFCH#D to transmit a HARQ response to the UE 200A. Here, as shown in the example of Fig. 12, when the number of available PSFCH resources is smaller than the number of receiving side UEs 200 belonging to the group, it is necessary to determine how to allocate the PSFCH resources. Note that the transmitting side UE 200 may grasp the number of receiving side UEs 200 in the groupcast. Note that in groupcast option 1, only NACK is transmitted as a HARQ response, and ACK is not transmitted.

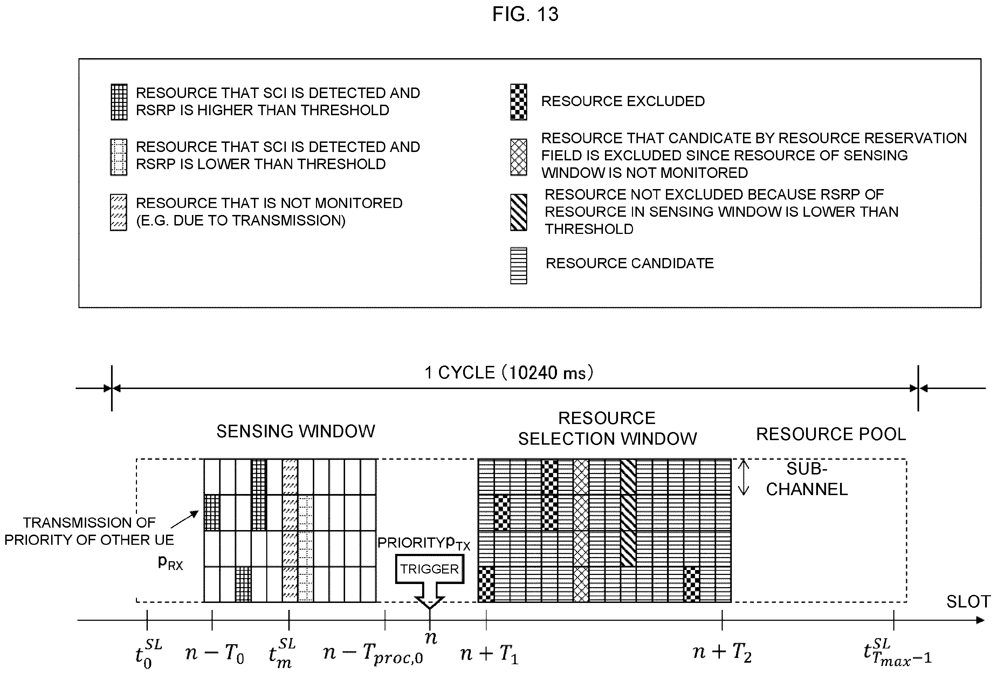

Fig. 13 is a diagram showing an example of a sensing operation in NR. In resource allocation mode 2 (Resource allocation mode 2), the UE 200 selects resources and performs transmission. As shown in Fig. 13, the UE 200 executes sensing in a sensing window in a resource pool. Through sensing, the UE 200 receives a resource reservation field or a resource assignment field included in SCI transmitted from another UE 200, and identifies candidate resources available in a resource selection window in the resource pool based on the field. Subsequently, the UE 200 randomly selects resources from the candidate resources available.

Also, as shown in Fig. 13, the configuration of the resource pool may have periodicity. For example, the period may be a period of 10240 milliseconds. Fig. 13 is an example in which slots from slot $t_0^{SL}$ to slot $t_{T\_max-1}^{SL}$ are configured as a resource pool. An area of the resource pool in each period may be configured by, for example, a bitmap.

Also, as shown in Fig. 13, it is assumed that a transmission trigger in the UE 200 occurs in slot n, and the priority of the transmission is $p_{TX}$. The UE 200 can detect, for example, that another UE 200 is performing transmission of priority $p_{RX}$ in a sensing window from slot n-T0 to a slot immediately before slot n-$T_{proc,0}$. When SCI is detected in the sensing window and RSRP (Reference Signal Received Power) exceeds a threshold, resources in the resource selection window corresponding to the SCI are excluded. Also, when SCI is detected in the sensing window and RSRP is less than the threshold, resources in the resource selection window corresponding to the SCI are not excluded. The threshold may be, for example, a threshold $Th_{pTX, pRX}$ configured or defined for each resource in the sensing window based on priority $p_{TX}$ and priority $p_{RX}$.

Also, like slot $t\_m^{SL}$ shown in Fig. 13, resources in the resource selection window that are candidates for resource reservation information corresponding to resources in the sensing window that were not monitored, for example, due to transmission, are excluded.

Regarding the resource selection window from slot n+T1 to slot n+T2, as shown in Fig. 13, resources occupied by other UEs are identified, and resources excluding such resources become candidate resources available. Assuming that a set of candidate resources available is $S_A$, if $S_A$ is less than 20% of the resource selection window, the threshold $Th_{pTX, pRX}$ set for each resource in the sensing window may be increased by 3 dB to execute identification of resources again. That is, by increasing the threshold $Th_{pTX, pRX}$ and executing identification of resources again, resources not excluded because RSRP is less than the threshold are increased so that the set $S_A$ of resource candidates becomes 20% or more of the resource selection window. When $S_A$ is less than 20% of the resource selection window, the operation of increasing the threshold $Th_{pTX, pRX}$ set for each resource in the sensing window by 3 dB and executing identification of resources again may be repeated.

The lower layer of the UE 200 may report the $S_A$ to the upper layer. The upper layer of the UE 200 may execute random selection on the $S_A$ to determine resources to be used. The UE 200 may execute sidelink transmission using the determined resources. For example, the upper layer may be a MAC layer, and the lower layer may be a PHY layer or a physical layer.

Although the operation of the transmitting side UE 200 has been described in Fig. 13 above, the receiving side UE 200 may detect data transmission from another UE 200 based on a result of sensing or partial sensing, and receive data from the other UE 200.

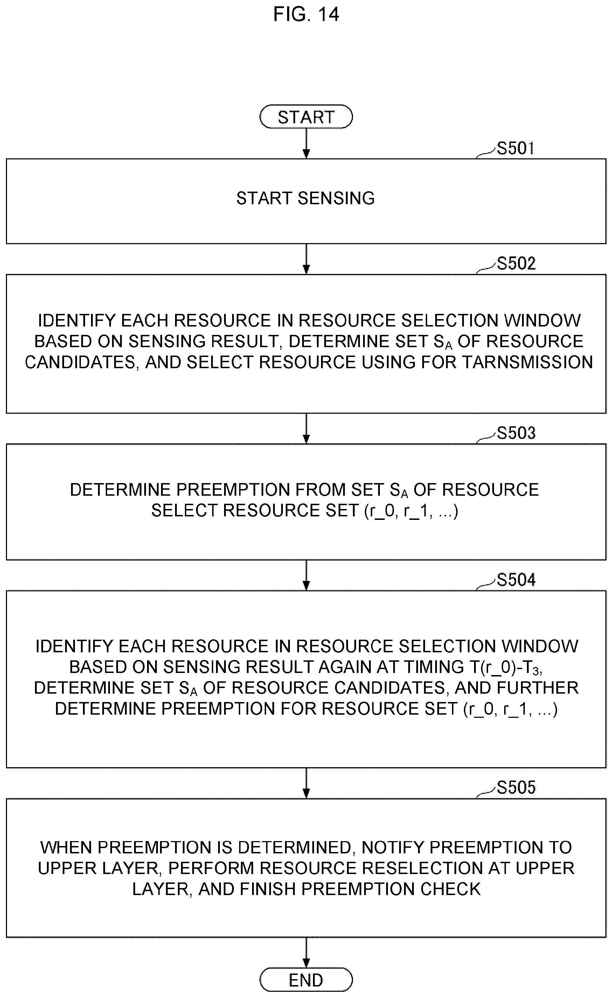

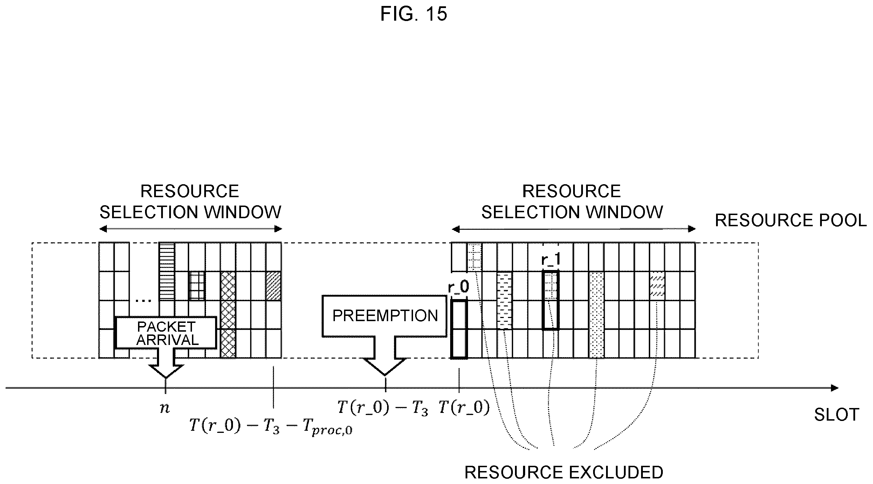

Fig. 14 is a flowchart showing an example of preemption in NR. Fig. 15 is a diagram showing an example of preemption in NR. As shown in Fig. 14, in step S501, the UE 200 executes sensing in a sensing window. When the UE 200 performs a power saving operation, sensing may be executed in a predefined limited period. Subsequently, the UE 200 identifies each resource in the resource selection window based on a result of the sensing to determine a set $S_A$ of resource candidates, and selects resources to be used for transmission (S502). Subsequently, the UE 200 selects a resource set (r_0, r_1, ...) for determining preemption from the set $S_A$ of resource candidates (S503). The resource set may be notified from the upper layer to the PHY layer as resources for determining whether or not preemption has been performed.

In step S504, the UE 200 identifies each resource in the resource selection window again based on a result of the sensing at a timing of $T(r\_0)$-$T_3$ shown in Fig. 15 to determine a set $S_A$ of resource candidates, and further determines preemption for the resource set (r_0, r_1, ...) based on priority. For example, regarding r_1 shown in Fig. 15, SCI transmitted from another UE 200 has been detected by the re-sensing, and r_1 is not included in the $S_A$. When preemption is enabled, if a value prio_RX indicating the priority of the SCI transmitted from the other UE 200 is lower than a value prio_TX indicating the priority of a transport block transmitted from the own terminal, the UE 200 determines that the resource r_1 has been preempted. Note that the lower the value indicating the priority is, the higher the priority is. That is, if the value prio_RX indicating the priority of the SCI transmitted from the other UE 200 is higher than the value prio_TX indicating the priority of the transport block transmitted from the own terminal, the UE 200 does not exclude the resource r_1 from the $S_A$. Alternatively, when preemption is valid only for a specific priority (for example, sl-PreemptionEnable is any of pl1, pl2, ..., pl8), let this priority be prio_pre. At this time, if the value prio_RX indicating the priority of the SCI transmitted from the other UE 200 is lower than prio_pre, and prio_RX is lower than the value prio_TX indicating the priority of the transport block transmitted from the own terminal, the UE 200 determines that the resource r_1 has been preempted.

In step S505, when preemption is determined in step S504, the UE 200 notifies the upper layer of the preemption, performs resource reselection in the upper layer, and ends the preemption check.

Note that in a case where Re-evaluation is executed instead of the preemption check, if the resources of the resource set (r_0, r_1, ...) are not included in the $S_A$ after determining the set $S_A$ of resource candidates in step S504, the resources are not used, and resource reselection is performed in the upper layer.

In NR sidelink, power saving based on random resource selection and partial sensing has been specified. The UE 200 to which partial sensing is applied performs reception and sensing only in specific slots in the sensing window. That is, the UE 200 may execute partial sensing in which identification of resources is executed by sensing only for limited resources compared to full sensing, and resource selection is performed from the identified resource set. Also, the UE 200 may execute random selection in which resources in the resource selection window are used as the identified resource set without excluding resources from the resources in the resource selection window, and resource selection is performed from the identified resource set.

Note that a method of executing random selection at the time of resource selection and using sensing information at the time of re-evaluation or preemption check may be treated as partial sensing or may be treated as random selection.

Note that 1) and 2) shown below may be applied as an operation in sensing. Note that sensing and monitoring may be read interchangeably, and at least one of measurement of reception RSRP, acquisition of reservation resource information, and acquisition of priority information may be included in the operation.

1) Periodic-based partial sensing

An operation of determining sensing slots based on a reservation periodicity in a mechanism in which sensing is performed only in some slots. Note that the reservation periodicity is a value related to a resource reservation period field. Note that the period may be replaced with periodicity.

2) Contiguous partial sensing

An operation of determining sensing slots based on aperiodic reservation in a mechanism in which sensing is performed only in some slots. Note that the aperiodic reservation is a value related to a time resource assignment field.

Also, a plurality of resource allocation methods can be configured in a certain resource pool. Also, SL-DRX (Discontinuous reception) is supported as one of power saving functions. That is, a reception operation is performed only in a predetermined time section.

As described above, partial sensing is supported as one of the power saving functions. In a resource pool in which partial sensing is configured, the UE 200 may execute the above-described periodic-based partial sensing. The UE 200 may receive information for configuring a resource pool in which partial sensing is configured and periodic reservation is configured to be enabled, from the gNB 100.

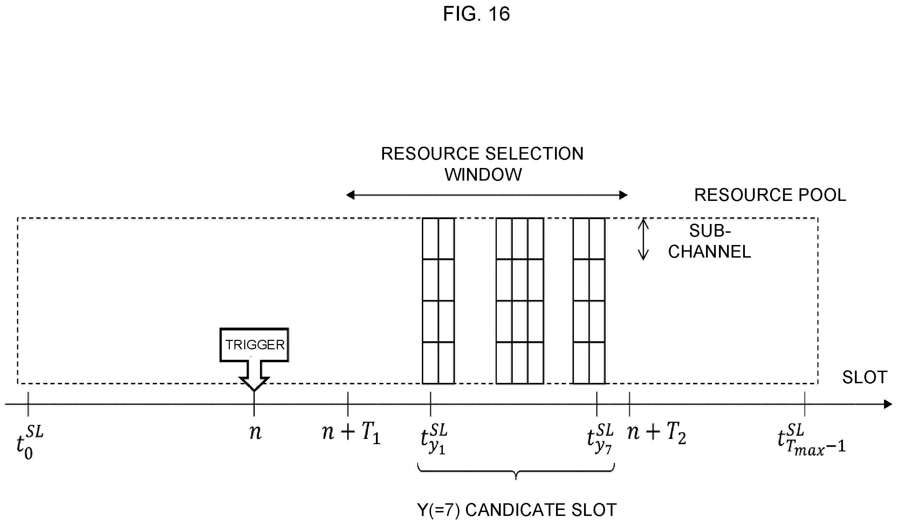

Fig. 16 is a diagram for explaining an example of periodic-based partial sensing. As shown in Fig. 16, Y candidate slots for resource selection are selected from a resource selection window [n+T1, n+T2].

Assuming that $t_y^{SL}$ is one slot included in the Y candidate slots, sensing may be performed with $t_{y-k*Preserve}^{SL}$ as a target slot for periodic-based partial sensing.

$P_{reserve}$ may correspond to all values included in a set sl-ResouceReservePeriodList that is configured or predefined. Alternatively, a value of $P_{reserve}$ limited to a subset of sl-ResouceReservePeriodList may be configured or predefined. $P_{reserve}$ and sl-ResouceReservePeriodList may be configured for each transmission resource pool of resource allocation mode 2. Also, as UE implementation, periods included in sl-ResouceReservePeriodList other than the limited subset may be monitored. For example, the UE 200 may additionally monitor an occasion corresponding to P_RSVP_Tx.

Regarding a k value, the UE 200 may monitor the latest sensing occasion in a certain reservation period before slot n of a resource selection trigger or before the first slot of the Y candidate slots subject to processing time restrictions. Also, the UE 200 may additionally monitor periodic sensing occasions corresponding to a set of one or more k values. For example, as the k value, a value corresponding to the latest sensing occasion in a certain reservation period before slot n of the resource selection trigger, or before the first slot of Y candidate slots subject to processing time restrictions, and a value corresponding to the sensing occasion immediately preceding the latest sensing occasion in the certain reservation period may be configured.

As described above, partial sensing is supported as one of the power saving functions. In a resource pool in which partial sensing is configured, the UE 200 may execute the above-described contiguous partial sensing. The UE 200 may receive information for configuring a resource pool in which partial sensing is configured and aperiodic reservation is configured to be enabled, from the gNB 100.

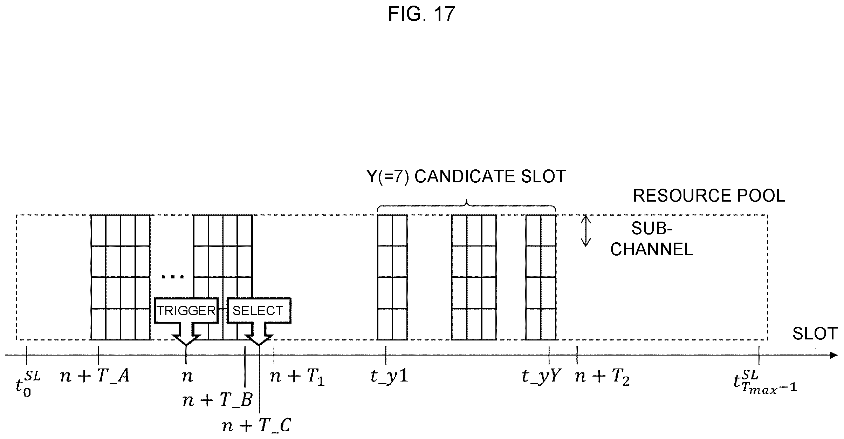

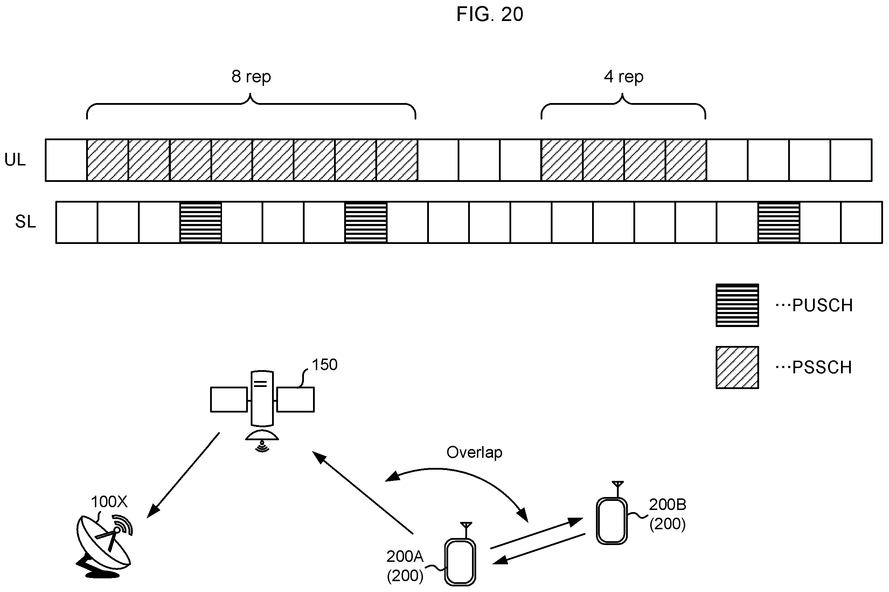

Fig. 17 is a diagram for explaining an example of contiguous partial sensing. As shown in Fig. 17, when a trigger for resource selection is slot n, the UE 200 selects Y candidate slots for resource selection from a resource selection window [n+T₁, n+T₂]. Fig. 20 is an example where Y=7. As shown in Fig. 17, the head of the Y candidate slots is denoted as slot $t_{y1}$, the next slot as $t_{y2}$, ..., and the end of the Y candidate slots as slot $t_{-yY}$.

The UE 200 performs sensing in a section [n+T_A, n+T_B], and executes resource selection at n+T_B or after n+T_B (assumed to be n+T_C). Note that the above-described periodic-based partial sensing may be additionally executed. Note that TA and TB in the section [n+T_A, n+T_B] may be any values. Also, n may be replaced with an index of any slot among the Y candidate slots.

Also, the symbol [ may be replaced with the symbol (, and the symbol ] may be replaced with the symbol ). Note that, for example, a section [a, b] is a section from slot a to slot b, and includes slot a and slot b. For example, a section (a, b) is a section from slot a to slot b, and does not include slot a and slot b.

Note that although candidate resources subject to resource selection are described as Y candidate slots, all slots in the section [n+T₁, n+T₂] may be candidate slots, or some slots may be candidate slots.

Also, inter-UE coordination has been specified as a method for improving reliability and latency performance. For example, inter-UE coordination method 1 and inter-UE coordination method 2 shown below are specified. Hereinafter, a UE 200 transmitting coordination information is described as UE-A, and a UE 200 receiving coordination information is described as UE-B.

Inter-UE coordination method 1) A preferred resource set and/or a non-preferred resource set for transmission of the UE-B is transmitted from the UE-A to the UE-B. Hereinafter, the inter-UE coordination method 1 is also described as IUC scheme 1 (Inter-UE coordination scheme 1).

Inter-UE coordination method 2) The UE-A transmits, to the UE-B, information indicating resources in which collision with other transmission or reception is expected and/or resources in which collision has been detected, in resources indicated by SCI received from the UE-B. The information may be transmitted via PSFCH. Hereinafter, the inter-UE coordination method 2 is also described as IUC scheme 2 (Inter-UE coordination scheme 2).

Also, SL communication may be applied to an unlicensed band, for example, a 5 GHz-7 GHz band, a 60 GHz band, or the like.

(5) Problems

Next, problems of the embodiment will be described.

Since the existing technology regarding SL communication assumes a TN, there is room for study as to whether the existing technology regarding SL communication can be applied to an NTN as it is.

As a result of intensive studies, the inventors have found a need to clarify a mechanism for appropriately executing SL communication assuming an NTN because a cell belonging to an NTN (NTN Cell) has a wider coverage area than a cell belonging to a TN (TN Cell).

(6) Operation Examples

Next, based on the above-described problems, operation examples of the embodiment will be described. As operation examples, the following operation examples are conceivable.

(6.1) Operation Example 1

In Operation Example 1, an overview of SL communication regarding an NTN Cell will be described.

In Operation Example 1, the UE 200 includes a reception unit (for example, the radio signal transmission/reception unit 210) that receives first information identifying that a target cell is a specific cell belonging to a non-terrestrial network (NTN Cell), and second information identifying that the target cell supports sidelink communication (SL communication). The gNB 100 includes a transmission unit (for example, the transmission unit 120) that transmits first information identifying that a target cell is a specific cell belonging to a non-terrestrial network (NTN Cell), and second information identifying that the target cell supports sidelink communication (SL communication). The target cell may be read as a certain cell, or may be read as a cell from which the UE 200 can receive a broadcast signal (MIB/SIB/SSB, etc.).

The first information may be at least any one of broadcast information (SIB1) including information indicating that the target cell is an NTN Cell and broadcast information (NTN-specific SIB) including parameters used in the NTN Cell. For example, the NTN-specific SIB may be referred to as SIB19.

The second information may be broadcast information (SL-specific SIB) including parameters used in SL communication. For example, the SL-specific SIB may be referred to as SIB12.

Here, the first information and the second information may be separate broadcast information. It should be noted that in the existing technology, an operation based on the first information and an operation based on the second information are assumed as separate operations, and an operation based on both the first information and the second information has not been assumed.

In Operation Example 1, the UE 200 includes a control unit (for example, the control unit 270) that executes specific control regarding sidelink communication based on the first information and the second information. The gNB 100 includes a control unit (for example, the control unit 130) that assumes that the UE 200 controls specific control regarding sidelink communication based on the first information and the second information.

As the specific control regarding sidelink communication, the following options are conceivable. The specific control according to Operation Example 1 may be referred to as first specific control.

In Option 1-1, a UE 200 capable of executing SL communication based on an NTN Cell may execute Uu communication with the NTN Cell based on the NTN-specific SIB, and execute SL communication based on the SL-specific SIB. In Option 1-1, Mode 1 resource allocation (first method) may be assumed as the SL communication, or Mode 2 resource allocation (second method) may be assumed.

According to Option 1-1, in an NTN Cell having a wide coverage area, SL communication can be executed under the control of the NTN Cell.

In Option 1-2, the UE 200 may transmit information indicating whether or not to execute SL communication based on the SL-specific SIB (hereinafter, first capability information) while connecting to the NTN Cell. The UE 200 may transmit information indicating whether or not an operation related to simultaneous execution of communication between the NTN Cell and the UE 200 (Uu communication) and SL communication based on the SL-specific SIB is possible (hereinafter, second capability information) while connecting to the NTN Cell. The UE 200 may transmit both the first capability information and the second capability information. The first capability information and the second capability information may be an example of UE Capability. In Option 1-2, Mode 1 resource allocation (first method) may be assumed as the SL communication, or Mode 2 resource allocation (second method) may be assumed.

Note that the simultaneous execution may mean executing SL communication in a state of being connected to the NTN Cell (RRC Connected). Therefore, when assuming a case where the UE 200 operates in Half-duplex, the simultaneous execution does not necessarily mean executing Uu communication and SL communication at timings that overlap in time. Alternatively, the simultaneous execution may mean executing Uu communication and SL communication at timings that overlap in time.

According to Option 1-2, for a UE 200 that wants to execute SL communication, an operation on the NW (NTN Cell) side can be appropriately determined.

In Option 1-3, the UE 200 may receive information indicating whether or not a UE 200 executing SL communication based on the SL-specific SIB can connect to the NTN Cell. When receiving information indicating that connection to the NTN Cell is possible, the UE 200 may execute SL communication based on the SL-specific SIB in addition to communication between the NTN Cell and the UE 200 (Uu communication). When receiving information indicating that connection to the NTN Cell is not possible, the UE 200 may execute any one of communication between the NTN Cell and the UE 200 (Uu communication) and SL communication based on the SL-specific SIB. In Option 1-3, Mode 1 resource allocation (first method) may be assumed as the SL communication, or Mode 2 resource allocation (second method) may be assumed.

According to Option 1-3, assuming a case where the gNB 100 does not support an operation related to simultaneous execution of communication between the NTN Cell and the UE 200 (Uu communication) and SL communication based on the SL-specific SIB, SL communication assuming an NTN can be appropriately executed.

In Option 1-4, information indicating whether or not a UE 200 that does not support an operation related to simultaneous execution of communication between the NTN Cell and the UE 200 (Uu communication) and SL communication based on the SL-specific SIB can connect to the NTN Cell may be received. When receiving information indicating that connection to the NTN Cell is possible, the UE 200 may execute SL communication based on the SL-specific SIB in addition to communication between the NTN Cell and the UE 200 (Uu communication). When receiving information indicating that connection to the NTN Cell is not possible, the UE 200 may execute any one of communication between the NTN Cell and the UE 200 (Uu communication) and SL communication based on the SL-specific SIB. In Option 1-4, Mode 1 resource allocation (first method) may be assumed as the SL communication, or Mode 2 resource allocation (second method) may be assumed.

According to Option 1-4, it is possible to avoid a situation where a UE 200 that does not support a quality improvement operation related to simultaneous execution of communication between the NTN Cell and the UE 200 (Uu communication) and SL communication based on the SL-specific SIB connects to the NTN Cell.

In Option 1-5, SL communication between a UE 200 executing SL communication based on an NTN Cell and a UE 200 executing SL communication not based on an NTN Cell will be described. The SL communication based on an NTN Cell may be Mode 1 resource allocation (first method) or Mode 2 resource allocation (second method) based on parameters configured via the NTN Cell. The SL communication not based on an NTN Cell may be Mode 1 resource allocation (first method) or Mode 2 resource allocation (second method) based on parameters that are not parameters configured via the NTN Cell (for example, parameters configured via a TN Cell, pre-configured parameters). In Option 1-5, the UE 200 executing SL communication based on an NTN Cell may execute the operations shown below.

In Option 1-5-1, the UE 200 may execute SL communication using resources for SL communication not based on an NTN Cell (for example, a resource pool of Pre-configuration). As such SL communication, the following options are conceivable.

In Option 1-5-1-1, the UE 200 may execute transmission of SL communication without executing reception of SL communication. The UE 200 may execute reception of SL communication without executing transmission of SL communication. The UE 200 may execute both transmission and reception of SL communication.

In Option 1-5-1-2, the UE 200 may simultaneously execute SL communication based on an NTN Cell and SL communication not based on an NTN Cell. In such a case, when the SL communication based on an NTN Cell and the SL communication not based on an NTN Cell overlap in time, the UE 200 may prioritize either one of the SL communications. For example, the SL communication based on an NTN Cell may be prioritized over the SL communication not based on an NTN Cell.

In Option 1-5-1-3, the UE 200 may execute SL communication based on an NTN Cell and SL communication not based on an NTN Cell by switching between them. In such a case, the switching may be performed by implementation of the UE 200. The switching may be performed based on the presence or absence of transmission data in each SL communication. The switching may be performed based on a connection status with another UE 200 executing SL communication.

In Option 1-5-2, the UE 200 does not have to execute SL communication using resources for SL communication not based on an NTN Cell (for example, a resource pool of Pre-configuration). For example, when receiving the SL-specific SIB (SIB12) from the NTN Cell, the UE 200 does not execute SL communication using resources for SL communication not based on an NTN Cell (for example, a resource pool of Pre-configuration).

In Option 1-5-3, it may be configured or notified regarding which of Option 1-5-1 and Option 1-5-2 is applied to the UE 200.

(6.2) Operation Example 2

In Operation Example 2, an overview of SL communication of Mode 1 resource allocation (first method) will be described.

In Operation Example 2, the UE 200 includes a reception unit (for example, the radio signal transmission/reception unit 210) that receives information indicating resources for sidelink communication in a specific cell belonging to a non-terrestrial network (NTN Cell). The gNB 100 includes a transmission unit (for example, the transmission unit 120) that transmits information indicating resources for sidelink communication in a specific cell belonging to a non-terrestrial network (NTN Cell).

In Operation Example 2, the UE 200 includes a control unit (control unit 270) that executes specific control regarding sidelink communication when resources for sidelink communication are allocated by the specific cell. The gNB 100 includes a control unit (for example, the control unit 130) that assumes that the UE 200 executes specific control regarding sidelink communication when resources for sidelink communication are allocated by the specific cell.

In Operation Example 2, the information indicating resources for sidelink communication may be DCI (DCI Format 3_0/3_1). "Resources for sidelink communication are allocated by the specific cell" may mean that Mode 1 resource allocation (first method) is applied, or may mean that resources for SL communication are allocated by DCI. Operation Example 2 may be applied to a case where the UE 200 executes an operation or control related to SL communication of another UE 200 based on notification from the NW (NTN Cell).

As the specific control regarding sidelink communication, the following options are conceivable. The specific control according to Operation Example 2 may be referred to as second specific control. Note that Operation Example 2 may be premised on the above-described Operation Example 1.

In Option 2-1, the UE 200 may execute, as the second specific control, control of determining a timing to transmit feedback (HARQ-ACK) regarding SL communication to the NTN Cell based on a specific parameter in the NTN Cell. Transmitting to the NTN Cell may mean transmitting to the gNB 100. The specific parameter may be K_offset.

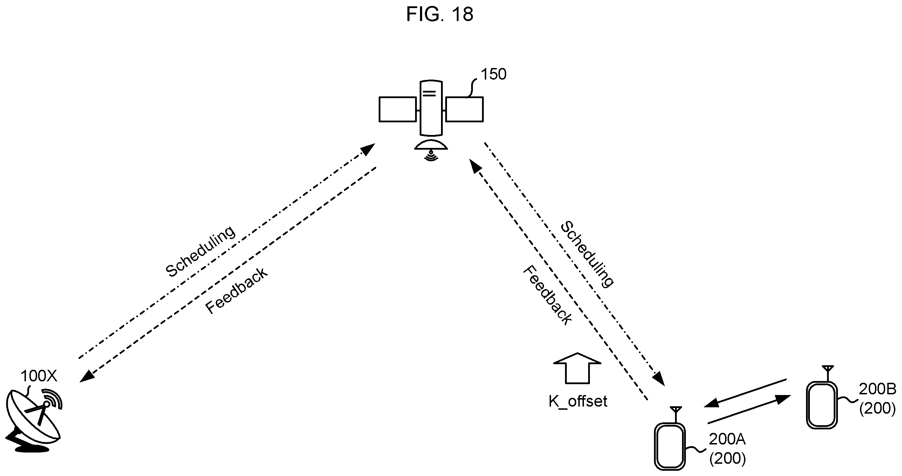

In Option 2-1-1, as shown in Fig. 18, an operation of a UE 200A to which resources for SL communication are allocated, where SL communication is executed between the UE 200A and a UE 200B, will be described. Specifically, the UE 200A receives DCI (for example, DCI Format 3_0) scheduling resources for SL communication. The UE 200A receives HARQ-ACK from the UE 200B via PSFCH (Physical Sidelink Feedback Channel) corresponding to PSSCH (Physical Sidelink Shared Channel) transmitted using the resources scheduled by the DCI. The UE 200A determines a timing to transmit the HARQ-ACK received from the UE 200B to the NTN Cell using K_offset used in communication between the NTN Cell and the UE 200 (Uu communication).

The timing to transmit the HARQ-ACK to the NTN Cell may be represented by a PUCCH/PUSCH slot. The PUCCH/PUSCH slot may be represented by PUCCH/PUSCH slot $= n + k + 2^{\mu - \mu_{K\_offset}} * K\_offset$.

n is the last slot of the PSFCH Rx occasion.

K is a value of a field of PSFCH-to-HARQ feedback timing indicator.

$\mu$ is an SCS configuration for transmission of PUCCH/PUSCH.

$\mu_{K\_offset}$ may be zero in FR1.

Note that a coefficient of K_offset may be different from a coefficient used in Uu communication not related to sidelink between the NTN Cell and the UE 200.

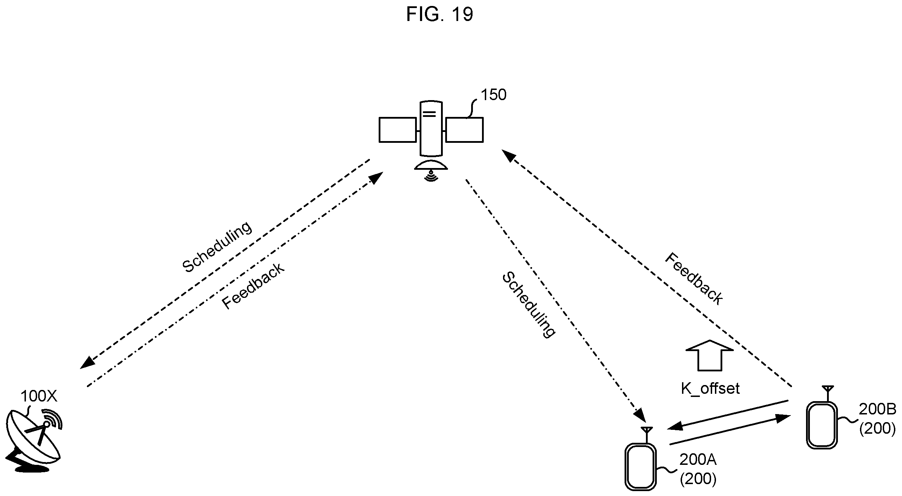

In Option 2-1-2, as shown in Fig. 19, an operation of the UE 200B receiving an SL signal from the UE 200A to which resources for SL communication are allocated, where SL communication is executed between the UE 200A and the UE 200B, will be described. Specifically, the UE 200B receives PSSCH transmitted using resources scheduled by DCI (for example, DCI Format 3_0) to the UE 200A. The UE 200B determines a timing to transmit HARQ-ACK to the NTN Cell using K_offset used in communication between the NTN Cell and the UE 200 (Uu communication) (that is, K_offset applied to the UE 200A).

The timing to transmit the HARQ-ACK to the NTN Cell may be represented by a PUCCH/PUSCH slot. The PUCCH/PUSCH slot may be represented by PUCCH/PUSCH slot $= n + k + 2^{\mu - \mu_{K\_offset}} * K\_offset$.

n is the last slot of a PSFCH Tx occasion or a PSSCH Rx occasion.

K is a value of a field of PSFCH-to-HARQ feedback timing indicator or a field of PSSCH-to-HARQ feedback timing indicator.

$\mu$ is an SCS configuration for transmission of PUCCH/PUSCH.

$\mu_{K\_offset}$ may be zero in FR1.

Note that a coefficient of K_offset may be different from a coefficient used in Uu communication not related to sidelink between the NTN Cell and the UE 200.

Here, the UE 200B does not grasp parameters (for example, resources of PSFCH, k, K_offset) used for determining the timing to transmit the HARQ-ACK to the NTN Cell. Therefore, the UE 200A notifies the UE 200B of the parameters (for example, resources of PSFCH, k, K_offset) used for determining the timing to transmit the HARQ-ACK to the NTN Cell. Although not particularly limited, the parameters (for example, resources of PSFCH, k, K_offset) may be notified by S-SSB, PSSCH, or PSCCH transmitted from the UE 200A to the UE 200.

In Option 2-1-3, K_offset may be configured or notified as a value common to the NTN Cell. In other words, K_offset may be configured or notified by signaling common to the NTN Cell (cell common signaling). K_offset may be configured or notified as a value specific to the UE 200. In other words, K_offset may be configured or notified by signaling specific to the UE 200 (UE dedicated signaling).

The signaling may be signaling of any layer of RRC, MAC CE, and PHY.

K_offset for PUCCH/PUSCH transmitting HARQ-ACK related to SL communication may be configured or notified in common with K_offset for PUCCH/PUSCH transmitting HARQ-ACK related to DL communication. According to such a configuration, overhead of the NTN Cell can be suppressed.

K_offset for PUCCH/PUSCH transmitting HARQ-ACK related to SL communication may be configured or notified separately from K_offset for PUCCH/PUSCH transmitting HARQ-ACK related to DL communication. According to such a configuration, it is possible to improve flexibility and optimize the timing to transmit HARQ-ACK related to SL communication.

The value of K_offset for PUCCH/PUSCH transmitting HARQ-ACK related to SL communication may be different from the value of K_offset for PUCCH/PUSCH transmitting HARQ-ACK related to DL communication.

According to Option 2-1, even in an NTN Cell where propagation delay is assumed to be large, the timing to transmit HARQ-ACK related to SL communication can be instructed on the NTN Cell side. The timing to receive HARQ-ACK related to SL communication can be grasped.

In Option 2-2, the UE 200 may execute, as the second specific control, control of reporting a Timing Advance (TA) applied to a UL signal to the NTN Cell. The reporting destination may be the gNB 100 or another UE 200. As the reporting of the TA, the following options are conceivable.

In Option 2-2-1, the UE 200 may execute the reporting of the TA by the method shown below.

In Option 2-2-1-1, the UE 200 may periodically report the TA. The periodic reporting of the TA and a reporting period of the TA may be configured by the gNB 100. The UE 200 may report the TA using a MAC-CE.

In Option 2-2-1-2, the UE 200 may semi-persistently report the TA. The semi-persistent reporting of the TA and a reporting period of the TA may be configured by the gNB 100. The semi-persistent reporting of the TA may be activated or released by a MAC-CE or DCI. When the semi-persistent reporting of the TA is activated, the UE 200 may execute the reporting of the TA until the semi-persistent reporting of the TA is released. When an RRC connection is terminated, the UE 200 may release the semi-persistent reporting of the TA, and when a release command is received, the UE 200 may release the semi-persistent reporting of the TA. The UE 200 may report the TA using a MAC-CE.

In Option 2-2-1-3, the UE 200 may report the TA by physical layer signaling instead of the MAC-CE. Similarly to Option 2-2-1-1, the UE 200 may periodically report the TA, and similarly to Option 2-2-1-2, the UE 200 may semi-persistently report the TA. Similarly to Option 2-2-1-4 described later, the UE 200 may trigger the reporting of the TA by an event. The TA may be reported as a type of UCI (for example, CSI or the like) on PUCCH or PUSCH. A reporting type of the TA (for example, TA report) may be defined as a type of CSI, and may be associated with a specific priority.

In Option 2-2-1-4, the UE 200 triggers the reporting of the TA by an event. The UE 200 may report the TA using a MAC-CE, or may report the TA using physical layer signaling.

The event may be SL/UL overlap related to Half Duplex (hereinafter, HD), priority control of SL/UL related to HD, reception of a reporting request for the TA, detection that an SL/UL gap is equal to or less than a predetermined threshold, acquisition of $N_{TA,common}$, acquisition of orbit information of the satellite 150, execution of GNSS acquisition, detection that a difference between the previous reported value of the TA and the current value of the TA is equal to or greater than a specific threshold, or the like. The specific threshold may be considered to be a threshold for NTN. The specific threshold may be a value smaller than a threshold used for determination of TA reporting in TN. The specific threshold may be referred to as offsetThresholdTA-r19.

Note that in a case where UL Tx is prioritized when SL/UL overlap related to HD occurs, the UL Tx may include priority related information described later, may include the TA together with the priority related information described later, or may include the TA instead of the priority related information described later.

Note that when SL/UL overlap related to HD occurs and HARQ-ACK regarding SL communication is transmitted to the gNB 100, the HARQ-ACK transmitted to the gNB 100 may include priority related information described later, may include the TA together with the priority related information described later, or may include the TA instead of the priority related information described later.

In Option 2-2-1, two or more options selected from Option 2-2-1-1 to Option 2-2-1-4 may be combined.

In Option 2-2-1, the reporting period of the TA used in Option 2-2-1-1 or Option 2-2-1-2 may be changed by a parameter related to the satellite 150. For example, the higher the altitude of the satellite 150, the shorter the reporting period of the TA may be.

In Option 2-2-2, the content of the reporting of the TA described in Option 2-2-1 will be described. As the content of the reporting of the TA, the following options are conceivable.

In Option 2-2-2-1, the granularity of the value of the TA may be a granularity of symbol, μs, ns, or the like. The granularity of the value of the TA reported in NTN may be finer than the granularity of the value of the TA reported in TN.

In Option 2-2-2-2, the content of the reporting of the TA may include information indicating a difference between the previous reported value of the TA and the current value of the TA.

In Option 2-2-2-3, the content of the reporting of the TA may include a predicted value of future TA. Option 2-2-2-3 may be applied only to a UE 200 that is not moving, or may be applied only to a UE 200 moving at a speed equal to or less than a threshold. The content of the reporting of the TA may include a predicted value of the TA for each of one or more future timings. The content of the reporting of the TA may include, together with the predicted value of the TA, parameters related to a coefficient of a linear term and a coefficient of a quadratic term indicating a change in the TA, and may be parameters similar to parameters related to $N_{TA,common}$.

In Option 2-2-2-4, the content of the reporting of the TA may include a value (or a predicted value) of $N_{TA,UE\text{-}specific}$ instead of the value (or the predicted value) of the TA.

In Option 2-2-2-5, the content of the reporting of the TA may include a geographical location (for example, longitude, latitude, altitude, etc.) of the UE 200 instead of the value (or the predicted value) of the TA.

In Option 2-2-2-6, the content of the reporting of the TA may include a representative value, an average value, a maximum value, or a minimum value of two or more values (or predicted values) of the TA in a certain period. The content of the reporting of the TA may include a fluctuation range of two or more values (or predicted values) of the TA in a certain period.

In Option 2-2, the UE 200 (HD supported) that has reported the TA does not have to assume SL/UL overlap.

In Option 2-2, two or more options selected from Option 2-2-2-1 to Option 2-2-2-6 may be combined.

In Option 2-2, Option 2-2-2-1 to Option 2-2-2-3 may be applied to existing reporting or signaling.

According to Option 2-2, since the gNB 100 side can grasp the value of the TA applied to the UL signal for the NTN Cell, SL/UL overlap can be suppressed.

In Option 2-3, the UE 200 may execute, as the second specific control, resolution of temporal overlap between an uplink signal and a sidelink signal by priority control. As the priority control, existing priority control may be used, or priority control different from the existing priority control may be used. The existing priority control may be priority control for resolving temporal overlap between an uplink signal and a sidelink signal.

In Option 2-4, when temporal overlap between UL Tx and SL Tx occurs, the UE 200 may execute, as the second specific control, control of reporting (priority related information) from the UE 200 to the gNB 100.

In Option 2-4-1, when overlap occurs, the UE 200 executes reporting to the gNB 100. The reporting content may include that overlap has occurred, or may include that priority control has occurred. The reporting content may include information indicating a timing at which overlap (priority control) occurred. The reporting content may include information indicating a channel/signal in which overlap (priority control) occurred. The reporting content may include information regarding time of overlap (SL/UL time gap) (for example, start timing of overlap and time length of overlap). The reporting content may include information indicating a prioritized channel/signal, or may include information indicating a cancelled or postponed channel/signal.

In Option 2-4-2, the UE 200 may execute the reporting by RRC signaling. The UE 200 may execute the reporting by MAC-CE signaling. In such a case, the UE 200 may execute the reporting together with a TA report or the like. The UE 200 may execute the reporting by physical layer signaling. In such a case, the UE 200 may execute the reporting by CSI together with the TA report, or may execute the reporting (for example, one-bit information indicating that overlap has occurred) together with HARQ-ACK by a method similar to HARQ-ACK/SR.

Note that regarding the physical layer signaling, when a periodic PUCCH resource is defined/configured similarly to SR, the reporting may be executed using the earliest resource after overlap (priority control) occurs.

In Option 2-4, the UE 200 may execute the reporting not only when overlap (priority control) occurs but also when an SL/UL gap (difference between an end timing of one communication and a start timing of the other communication) is smaller than a threshold. The threshold may be predefined in the radio communication system 10, or may be configured by RRC. The case where overlap (priority control) occurs may be read as a case where the SL/UL gap is small.

In Option 2-4, the condition for reporting that overlap has occurred may be used as a trigger for the reporting of the TA described in Option 2-4-1 (event in Option 2-4-1-4). For example, when reporting that overlap has occurred is executed, the reporting of the TA described in 2-2-1 may also be executed.

In Option 2-4, the reporting that overlap has occurred may be executed in a case where SL Tx is prioritized. That is, the reporting that overlap has occurred may be executed in a case where UL Tx is cancelled or postponed. In other words, the reporting that overlap has occurred may be omitted in a case where SL Tx is cancelled or postponed.

According to Option 2-4, since the gNB 100 side or the UE 200 can grasp information regarding SL/UL overlap occurring on the UE 200 side, SL/UL overlap can be suppressed.

In Option 2-5, the UE 200 may execute, as the second specific control, control of using a TA used in UL communication for SL communication. Such control may include options shown below.

In Option 2-5-1, when synchronization processing is executed based on a signal from GNSS/gNB 100, the UE 200 may use the TA used in UL communication for SL communication. When the TA used in UL communication is used for SL communication, the UE 200 may omit transmission or reception of an S-SSB (Sidelink-Synchronization Signal Block).

Here, the priority of the S-SSB may be lower than the priority of the signal from GNSS, or may be lower than the priority of the signal from the gNB 100 (for example, SSB).

In Option 2-5-2, the value of the TA applied to SL communication may be shared among UEs 200. The value of the TA applied to SL communication may be shared by transmission of an S-SSB.

When performing synchronization processing by an S-SSB, the UE 200 may identify an SL communication frame timing based on a reception timing of the S-SSB and the shared value of the TA.

The value of the TA applied in SL communication may be the shared value of the TA, not the value of the TA possessed by the UE 200 itself.

According to Option 2-5, since the Tx timing of the UE 200 and the SL frame timing are aligned, it is possible to determine on the gNB side whether or not SL/UL overlap occurs.

In Option 2-6, the UE 200 determines whether or not to transmit HARQ-ACK regarding SL communication to the NTN Cell as the second specific control. As a determination method, the following options are conceivable.

In Option 2-6-1, the UE 200 determines whether or not to transmit HARQ-ACK regarding SL communication to the NTN Cell based on an upper layer parameter (HARQ feedback enabling/disabling configuration per HARQ process).

For example, the UE 200 determines whether or not to transmit HARQ-ACK regarding SL communication to the NTN Cell based on a HARQ process number notified by DCI (DCI Format 3_0) scheduling SL communication.

The upper layer parameter for SL HARQ-ACK may be configured in common with an upper layer parameter for DL HARQ-ACK. The upper layer parameter for SL HARQ-ACK may be configured separately from the upper layer parameter for DL HARQ-ACK. In such a case, when both the upper layer parameter for SL HARQ-ACK and the upper layer parameter for DL HARQ-ACK are configured, the UE 200 may determine that the upper layer parameters are configured separately. When any one of the upper layer parameter for SL HARQ-ACK and the upper layer parameter for DL HARQ-ACK is configured, the UE 200 may determine that the upper layer parameter is configured in common.

When both a value of a PRI (PUCCH Resource Indicator) field and a value of a PSFCH-to-HARQ feedback timing indicator field of DCI are 0, the UE 200 may omit transmission of HARQ-ACK regarding SL communication. However, such interpretation may not be applied, and the UE 200 may transmit HARQ-ACK regarding SL communication using a PUCCH/PUSCH resource based on the value of the PRI field and the value of the PSFCH-to-HARQ feedback timing indicator field.

In Option 2-6-2, the UE 200 determines whether or not to transmit HARQ-ACK regarding SL communication to the NTN Cell regardless of the upper layer parameter (HARQ feedback enabling/disabling configuration per HARQ process).

For example, when both the value of the PRI field and the value of the PSFCH-to-HARQ feedback timing indicator field of DCI are 0, the UE 200 may omit transmission of HARQ-ACK regarding SL communication. When both the value of the PRI field and the value of the PSFCH-to-HARQ feedback timing indicator field of DCI are not 0, the UE 200 may transmit HARQ-ACK regarding SL communication.

In Option 2-6-3, which of Option 2-6-1 and Option 2-6-2 is applied may be configured, notified, or determined. For example, Option 2-6-1 may be applied if there is a configuration of the upper layer parameter (HARQ feedback enabling/disabling configuration per HARQ process), and Option 2-6-2 may be applied if there is no configuration of the upper layer parameter.

According to Option 2-6, the effects shown below are obtained. Specifically, according to Option 2-6-1, a mechanism of HARQ-ACK feedback related to SL communication can be made similar to a mechanism of HARQ-ACK feedback related to DL communication. According to Option 2-6-2, a mechanism of HARQ-ACK feedback related to SL communication of NTN can be made similar to a mechanism of HARQ-ACK feedback related to SL communication of TN.

In Option 2-7, UE Capability regarding one or more options selected from Option 2-1 to Option 2-6 may be defined. The UE 200 may report the UE Capability to the gNB 100. An option applied to the UE 200 from among Option 2-1 to Option 2-6 may be determined based on the UE Capability.

(6.3) Operation Example 3

In Operation Example 3, an overview of SL communication of Mode 2 resource allocation (second method) will be described.

In Operation Example 3, the UE 200 includes a communication unit (for example, the radio signal transmission/reception unit 210) that executes transmission of an uplink signal to a specific cell belonging to a non-terrestrial network (NTN Cell) and sidelink communication. The gNB 100 includes a reception unit (for example, the reception unit 110) that receives an uplink signal to a specific cell belonging to a non-terrestrial network (NTN Cell).

In Operation Example 3, the UE 200 includes a control unit (control unit 270) that executes specific control regarding transmission of the uplink signal and sidelink communication when autonomously selecting resources for the sidelink communication. The gNB 100 includes a control unit (for example, the control unit 130) that assumes that the UE 200 executes specific control regarding transmission of the uplink signal and sidelink communication when autonomously selecting resources for the sidelink communication.

In Operation Example 3, "autonomously selecting resources for the sidelink communication" may mean that Mode 2 resource allocation (second method) is applied, or may mean determining resources based on reservation information of another UE 200. Operation Example 3 may be applied to a case where the UE 200 executes an operation or control related to SL communication of another UE 200 based on notification from the NW (NTN Cell).

Operation Example 3 may be applied when band/carrier/FR/cell of SL/UL are the same. Operation Example 3 may be applied to a band/carrier/FR combination where there is a restriction on simultaneous execution of SL communication and UL transmission. Operation Example 3 may be applied to a band/carrier/FR combination where there is priority control of SL communication and UL transmission.

Operation Example 3 may be applied to SL transmission without being applied to SL reception. Operation Example 3 may be applied to SL reception without being applied to SL transmission. Operation Example 3 may be applied to both SL transmission and SL reception.

Note that in Operation Example 3, as shown in Fig. 20, a case where overlap between SL communication and UL transmission occurs in an NTN Cell is mainly assumed. In an NTN Cell, since UL repetition transmission (8rep, 4rep in Fig. 20) is assumed, an increase in cases where overlap between SL communication and UL transmission occurs is assumed.

When overlap between SL communication and UL transmission occurs, a need to drop any one of SL communication and UL transmission or a need to reduce power of any one of SL communication and UL transmission arises, so there is a concern about degradation of communication quality. Furthermore, assuming Half-duplex, since sensing for selecting resources for SL communication cannot be performed in a UL transmission section, there is also a concern about collision of SL communication between UEs 200.

In order to solve such problems, specific control regarding transmission of an uplink signal and sidelink communication is executed. As the specific control, the following options are conceivable. The specific control according to Operation Example 3 may be referred to as third specific control. Note that Operation Example 3 may be premised on the above-described Operation Example 1.

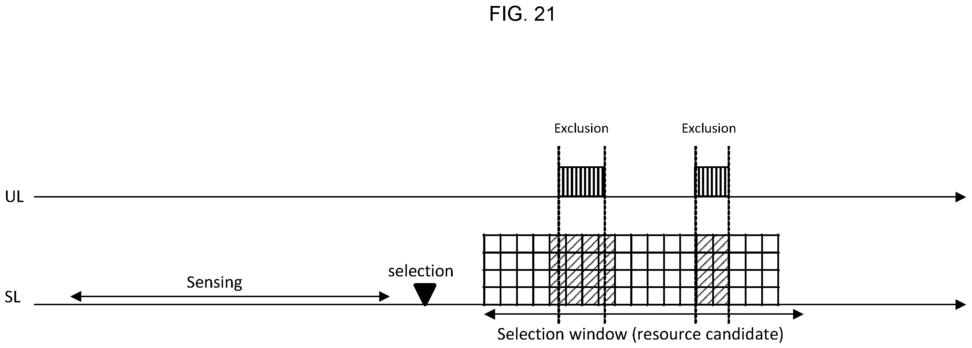

In Option 3-1, as shown in Fig. 21, the UE 200 may execute, as the third specific control, control of excluding resources for SL communication that temporally overlap with resources of a UL signal from candidates for resources for SL communication (Selection window in Fig. 21). Option 3-1 may include options shown below.

In Option 3-1-1, the UE 200 may exclude resources for SL communication that temporally overlap with Switching time provided before resources of a UL signal. The UE 200 may exclude resources for SL communication that temporally overlap with Switching time provided after resources of a UL signal. The UE 200 may exclude resources for SL communication that temporally overlap with Switching time provided before and after resources of a UL signal.

In Option 3-1-2, the UE 200 identifies a timing of resources of a UL signal that overlaps with candidates for resources for SL communication based on a TA. As the TA, the following options are conceivable.

In Option 3-1-2-1, the UE 200 may predict a TA of a future timing at which SL communication is assumed based on at least any one of a common TA and orbit information of the satellite 150. The UE 200 may identify the timing of resources of the UL signal based on the predicted TA.

In Option 3-1-2-2, the UE 200 may identify the timing of resources of the UL signal based on a TA at a timing of selecting resources for SL communication.

In Option 3-1-2-3, when executing an operation of checking whether or not selected or reserved resources can be used (Re-evaluation, Pre-emption check), the UE 200 may identify the timing of resources of the UL signal based on a TA different from the TA used at the time of resource selection (Resource selection). The TA different from the TA used in Resource selection may be a TA at a timing of executing Re-evaluation or Pre-emption check.

The UE 200 may execute the operation of checking whether or not selected or reserved resources can be used (Re-evaluation, Pre-emption check) when reacquisition of the common TA, the orbit information of the satellite 150, or the position information of GNSS is performed.

The UE 200 may execute the operation of checking whether or not selected or reserved resources can be used (Re-evaluation, Pre-emption check) when a variation amount of the TA exceeds a threshold. The threshold may be defined in advance in the radio communication system 10, or may be configured or notified from the NTN Cell.

The UE 200 may execute the operation of checking whether or not selected or reserved resources can be used (Re-evaluation, Pre-emption check) when a timer measuring a validity period of the common TA or the orbit information of the satellite 150 expires.

In Option 3-1-3, a UE 200 operating in Half-duplex may stop Resource selection when a specific condition caused by Half-duplex is satisfied. The UE 200 operating in Half-duplex may execute an operation of selecting resources for SL communication without involving sensing (Random selection) when the specific condition is satisfied. The UE 200 operating in Half-duplex may select resources for SL communication from a predetermined specific resource pool (Exceptional pool) when the specific condition is satisfied.

The specific condition may include a condition that the number of candidate slots for resources for SL communication becomes equal to or less than a predetermined threshold due to slots in which sensing could not be executed due to Half-duplex (Half-duplex slots). The specific condition may be read as a condition for omitting an operation of excluding resources for SL communication corresponding to Half-duplex slots. The specific condition may include a condition that the number of slots in which the cause of Half-duplex is UL transmission is equal to or greater than a predetermined threshold. The specific condition may include a condition that a ratio of the number of slots in which the cause of Half-duplex is UL transmission to the total number of candidate slots for resources for SL communication or the total number of Half-duplex slots is equal to or greater than a predetermined ratio. A plurality of the specific conditions described above may be combined.

According to Option 3-1, overlap between SL communication and UL transmission can be avoided in advance.

In Option 3-2, the UE 200 may execute, as the third specific control, control of reporting information regarding SL communication. As the information regarding SL communication, the following options are conceivable. Note that the reporting destination may be the gNB 100 or another UE 200.

In Option 3-2-1, the information regarding SL communication may include a time section X in which an operation regarding SL communication is executed. The time section X may be a time section determined by the UE 200, may be a time section from when data to be transmitted in SL communication is generated until there is no more data to be transmitted in SL communication, or may be a time section in which the UE 200 wants to execute SL communication. The time section in which the UE 200 wants to execute SL communication may include time for sensing, or may not include time for sensing.

In Option 3-2-2, the information regarding SL communication may include the priority related information described in Option 2-4. Also, the information regarding SL communication may include the information described in Option 2-2 or Option 2-3 described above.

In Option 3-2-3, the information regarding SL communication may include a time section Y in which the UE 200 is set to RRC IDLE/INACTIVE or SCell INACTIVE in the NTN Cell in order to execute SL communication. The time section Y may be the same value as the time section X described in Option 3-2-1.

In Option 3-2-4, the information regarding SL communication may include information regarding selected or reserved resources for SL communication. The information regarding resources for SL communication may include time resources, may include periodicity of resources, may include an end time of resources, and may include priority of resources.

According to Option 3-2, since the information regarding SL communication is reported to the gNB 100, overlap between SL communication and UL transmission can be suppressed in the gNB 100.

In Option 3-3, when supporting an operation related to simultaneous execution of SL communication and UL transmission in an NTN Cell, the UE 200 may execute the operation related to simultaneous execution of SL communication and UL transmission.

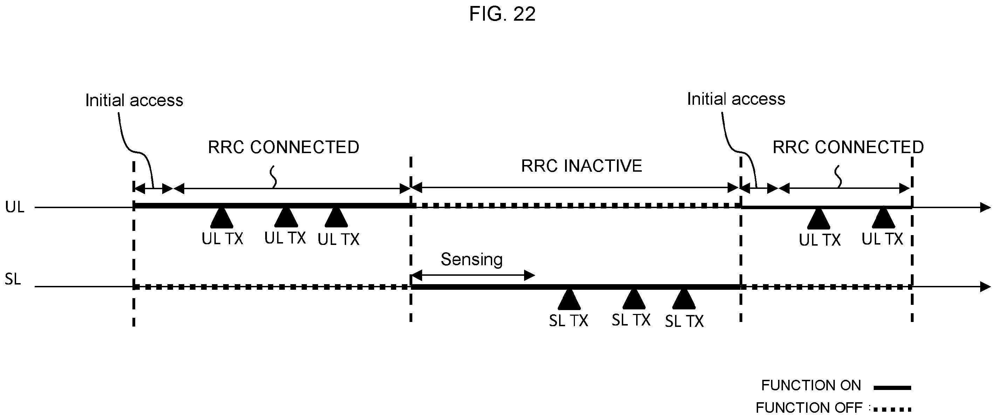

In Option 3-4, as shown in Fig. 22, when not supporting the operation related to simultaneous execution of SL communication and UL transmission in an NTN Cell, the UE 200 does not execute UL transmission in a first specific time section P in which an operation regarding SL communication is executed, and does not execute SL communication in a second specific time section Q in which UL transmission is executed. Specifically, the UE 200 may turn off a function regarding UL transmission in the first specific time section P in which SL communication is executed (for example, may transition to RRC INACTIVE). The UE 200 may turn off a function regarding SL communication in the second time section Q in which UL transmission (UL TX) is executed.

Note that the operation regarding SL communication may be read as an operation regarding SL transmission. In such a case, the operation regarding SL transmission may include sensing. The operation regarding SL transmission does not have to include SL reception other than sensing. That is, the operation regarding SL transmission may be considered to be an operation regarding SL transmission executed by the UE 200 itself.

First, in the first specific time section P in which SL communication is executed, UL transmission is not executed. In the first specific time section P, the UE 200 transitions to RRC IDLE, RRC INACTIVE, or SCell INACTIVE. In the first specific time section P, not only UL transmission but also an operation regarding Initial access may not be executed. The UE 200 may transition to RRC CONNECTED, may execute an operation regarding SCell activation, or may execute an operation regarding RRC resume, in response to expiration of the first specific time section P in which SL communication is executed.

The first specific time section P may be a time section determined by the UE 200, or may be a time section from when data to be transmitted in SL communication is generated until there is no more data to be transmitted in SL communication.

Second, in the second specific time section Q in which UL transmission is executed, an operation regarding SL communication (for example, an operation regarding SL transmission) is not executed.

The UE 200 executes the operation regarding SL communication so that UL transmission does not occur in a slot having resources for UL transmission. The slot having resources for UL transmission may include a slot executing sensing (Sensing slot), or may include a slot of candidate resources for SL communication.

Note that overlap between SL communication and UL transmission may be allowed up to a specific number of slots. Overlap between SL communication and UL transmission may be allowed up to the number of slots of a specific ratio to some of the number of slots available for communication (for example, the total number of candidate slots for resources for SL communication).

The second specific time section Q may be a time section of RRC CONNECTED. The second specific time section Q may include a time section of an operation regarding Initial access. The second specific time section Q may be a time section configured or notified by the NW (NTN Cell).

According to Option 3-4, since the operation of a UE 200 that does not support the operation related to simultaneous execution of SL communication and UL transmission is clarified, quality degradation associated with simultaneous execution of SL communication and UL transmission can be suppressed.

In Option 3, whether or not to apply Operation Example 3 to the UE 200 may be configured or notified from the NW (NTN Cell). An option applied to the UE 200 from among Option 3-1 to Option 3-4 may be configured or notified from the NW (NTN Cell).

In Option 3, Operation Example 3 may be applied to any one of Periodic SL transmission and Aperiodic SL transmission, or may be applied to both Periodic SL transmission and Aperiodic SL transmission. An option applied to Periodic SL transmission may be the same as an option applied to Aperiodic SL transmission, or may be different from an option applied to Aperiodic SL transmission.

(7) Action and Effects

In the embodiment, the UE 200 executes the first specific control regarding SL communication based on the first information (for example, SIB1/SIB19) and the second information (for example, SIB12). According to such a configuration, based on the fact that the first information and the second information are separate broadcast information, SL communication assuming an NTN can be appropriately executed.

In the embodiment, when resources for SL communication are allocated by the NTN Cell, the UE 200 executes the second specific control regarding SL communication. According to such a configuration, since the operation of SL communication of Mode 1 resource allocation (first method) in an NTN is clarified, SL communication assuming an NTN can be appropriately executed.

In the embodiment, when autonomously selecting resources for SL communication, the UE 200 executes specific control regarding UL transmission and SL communication. According to such a configuration, since the operation of SL communication of Mode 2 resource allocation (second method) in an NTN is clarified, SL communication assuming an NTN can be appropriately executed.

(8) Other Embodiments

Although the contents of the present invention have been described above with the embodiments, the present invention is not limited to these descriptions, and it is obvious to those skilled in the art that various modifications and improvements are possible.

In the above-described disclosure, the case where the non-terrestrial network device that relays the UL signal or the DL signal in the NTN is the satellite 150 has been illustrated. However, the above-described disclosure is not limited to this. The non-terrestrial network device may be any node configuring an NTN in the air, and may be referred to as an aerial node, an airborne body, or an aerial vehicle.

Although not particularly mentioned in the above-described disclosure, the following UE Capability may be defined. The following UE Capability may be reported from the UE 200 to the gNB 100.

In the above-described disclosure, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-dedicated may be read interchangeably. Similarly, common, shared, group-common, UE-common, and UE-shared may be read interchangeably.

The block configuration diagrams (Fig.s 4 to 6) used for the description of the above-described embodiments show blocks of functional units. These functional blocks (configuration units) are realized by an arbitrary combination of at least one of hardware and software. Also, the method for realizing each functional block is not particularly limited. That is, each functional block may be realized using one physically or logically combined device, or may be realized by directly or indirectly connecting two or more physically or logically separated devices (for example, using wired, wireless, etc.) and using these plurality of devices. The functional block may be realized by combining software with the one device or the plurality of devices.

Functions include judging, determining, deciding, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like, but are not limited thereto. For example, a functional block (configuration unit) that functions transmission is referred to as a transmitting unit or a transmitter. In any case, as described above, the realization method is not particularly limited.

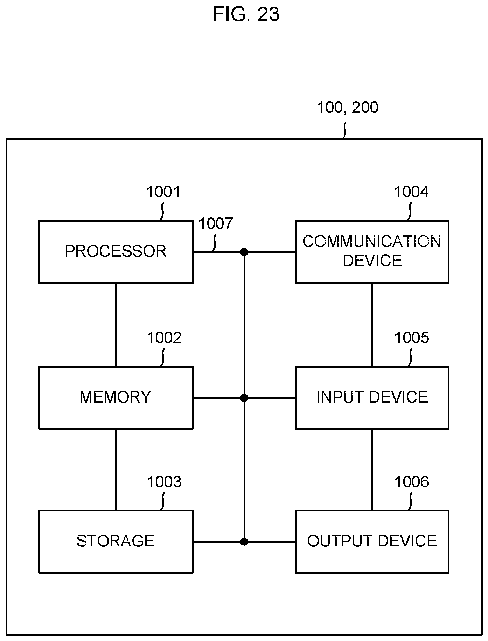

Furthermore, the gNB 100, the UE 200, and the LMF 300 (the devices) described above may function as a computer that performs processing of the radio communication method of the present disclosure. Fig. 23 is a diagram showing an example of a hardware configuration of the device. As shown in Fig. 23, the device may be configured as a computer device including a processor 1001, a memory 1002, a storage 1003, a communication device 1004, an input device 1005, an output device 1006, a bus 1007, and the like.

Note that in the following description, the term "device" can be read as a circuit, a device, a unit, or the like. The hardware configuration of the device may be configured to include one or a plurality of each device shown in the figure, or may be configured without including some devices.

Each functional block of the device (see Fig.s 4 to 6) is realized by any hardware element of the computer device or a combination of the hardware elements.

Also, each function in the device is realized by causing the processor 1001 to perform calculation by loading predetermined software (program) onto hardware such as the processor 1001 and the memory 1002, and controlling communication by the communication device 1004, or controlling at least one of reading and writing of data in the memory 1002 and the storage 1003.

The processor 1001 controls the entire computer by operating an operating system, for example. The processor 1001 may be composed of a central processing unit (CPU) including an interface with peripheral devices, a control device, an arithmetic device, a register, and the like.

Also, the processor 1001 reads a program (program code), a software module, data, and the like from at least one of the storage 1003 and the communication device 1004 to the memory 1002, and executes various processes according to these. As the program, a program that causes a computer to execute at least a part of the operations described in the above-described embodiments is used. Furthermore, the various processes described above may be executed by one processor 1001, or may be executed simultaneously or sequentially by two or more processors 1001. The processor 1001 may be implemented by one or more chips. Note that the program may be transmitted from a network via a telecommunication line.

The memory 1002 is a computer-readable recording medium, and may be composed of at least one of, for example, a Read Only Memory (ROM), an Erasable Programmable ROM (EPROM), an Electrically Erasable Programmable ROM (EEPROM), a Random Access Memory (RAM), and the like. The memory 1002 may be referred to as a register, a cache, a main memory (main storage device), or the like. The memory 1002 can store a program (program code), a software module, and the like capable of executing the method according to an embodiment of the present disclosure.

The storage 1003 is a computer-readable recording medium, and may be composed of at least one of, for example, an optical disk such as a Compact Disc ROM (CD-ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, and the like. The storage 1003 may be referred to as an auxiliary storage device. The above-described recording medium may be, for example, a database, a server, or other appropriate media including at least one of the memory 1002 and the storage 1003.

The communication device 1004 is hardware (transmission/reception device) for performing communication between computers via at least one of a wired network and a wireless network, and is also referred to as, for example, a network device, a network controller, a network card, a communication module, or the like.

The communication device 1004 may be configured to include a highfrequency switch, a duplexer, a filter, a frequency synthesizer, and the like, for example, in order to realize at least one of Frequency Division Duplex (FDD) and Time Division Duplex (TDD).

The input device 1005 is an input device (for example, a keyboard, a mouse, a microphone, a switch, a button, a sensor, etc.) that accepts input from the outside. The output device 1006 is an output device (for example, a display, a speaker, an LED lamp, etc.) that implements output to the outside. Note that the input device 1005 and the output device 1006 may have an integrated configuration (for example, a touch panel).

Also, each device such as the processor 1001 and the memory 1002 is connected by a bus 1007 for communicating information. The bus 1007 may be configured using a single bus, or may be configured using a different bus for each device.

Furthermore, the device may be configured to include hardware such as a microprocessor, a Digital Signal Processor (DSP), an Application Specific Integrated Circuit (ASIC), a Programmable Logic Device (PLD), and a Field Programmable Gate Array (FPGA), and some or all of the functional blocks may be realized by the hardware. For example, the processor 1001 may be implemented using at least one of these hardware.

Also, notification of information is not limited to the aspect/embodiment described in the present disclosure, and may be performed using other methods. For example, notification of information may be implemented by physical layer signaling (for example, Downlink Control Information (DCI), Uplink Control Information (UCI)), upper layer signaling (for example, RRC signaling, Medium Access Control (MAC) signaling, broadcast information (Master Information Block (MIB), System Information Block (SIB))), other signals, or a combination thereof. Also, RRC signaling may be referred to as an RRC message, and may be, for example, an RRC Connection Setup message, an RRC Connection Reconfiguration message, or the like.

Each aspect/embodiment described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next-generation system extended based on these. Also, a plurality of systems may be combined (for example, a combination of at least one of LTE and LTE-A and 5G, etc.) and applied.

The processing procedures, sequences, flowcharts, etc. of each aspect/embodiment described in the present disclosure may be reordered as long as there is no contradiction. For example, regarding the methods described in the present disclosure, elements of various steps are presented using an illustrative order, and are not limited to the specific order presented.

Specific operations performed by the base station in the present disclosure may be performed by its upper node in some cases. In a network consisting of one or a plurality of network nodes having a base station, it is obvious that various operations performed for communication with a terminal can be performed by at least one of the base station and other network nodes other than the base station (for example, MME or S-GW are conceivable, but not limited thereto). Although the case where there is one other network node other than the base station is illustrated above, it may be a combination of a plurality of other network nodes (for example, MME and S-GW).

Information, signals (information, etc.) may be output from an upper layer (or a lower layer) to a lower layer (or an upper layer). They may be input and output via a plurality of network nodes.

Input and output information may be stored in a specific location (for example, a memory), or may be managed using a management table. Input and output information may be overwritten, updated, or appended. Output information may be deleted. Input information may be transmitted to another device.

Determination may be performed by a value represented by 1 bit (0 or 1), may be performed by a Boolean value (true or false), or may be performed by numerical comparison (for example, comparison with a predetermined value).

Each aspect/embodiment described in the present disclosure may be used alone, may be used in combination, or may be used by switching along with execution. Also, notification of predetermined information (for example, notification of "being X") is not limited to being performed explicitly, but may be performed implicitly (for example, not performing notification of the predetermined information).

Software should be broadly interpreted to mean instructions, instruction sets, codes, code segments, program codes, programs, subprograms, software modules, applications, software applications, software packages, routines, subroutines, objects, executable files, execution threads, procedures, functions, etc., regardless of whether it is referred to as software, firmware, middleware, microcode, hardware description language, or by other names.

Also, software, instructions, information, etc. may be transmitted and received via a transmission medium. For example, when software is transmitted from a website, a server, or other remote sources using at least one of wired technologies (coaxial cable, optical fiber cable, twisted pair, Digital Subscriber Line (DSL), etc.) and wireless technologies (infrared, microwave, etc.), at least one of these wired technologies and wireless technologies is included within the definition of the transmission medium.

Information, signals, etc. described in the present disclosure may be represented using any of a variety of different technologies. For example, data, instructions, commands, information, signals, bits, symbols, chips, etc. that may be referred to throughout the above description may be represented by voltage, current, electromagnetic waves, magnetic fields or magnetic particles, optical fields or photons, or any combination thereof.

Note that terms described in the present disclosure and terms necessary for understanding the present disclosure may be replaced with terms having the same or similar meanings. For example, at least one of a channel and a symbol may be a signal (signaling). Also, a signal may be a message. Also, a component carrier (CC) may be referred to as a carrier frequency, a cell, a frequency carrier, or the like.

The terms "system" and "network" used in the present disclosure are used interchangeably.

Also, information, parameters, etc. described in the present disclosure may be represented using absolute values, may be represented using relative values from predetermined values, or may be represented using corresponding other information. For example, radio resources may be those indicated by an index.

The names used for the above-described parameters are not limiting names in any respect. Furthermore, mathematical formulas and the like using these parameters may differ from those explicitly disclosed in the present disclosure. Various channels (for example, PUCCH, PDCCH, etc.) and information elements can be identified by any suitable names, so the various names assigned to these various channels and information elements are not limiting names in any respect.

In the present disclosure, terms such as "Base Station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", and "component carrier" may be used interchangeably. A base station may be referred to by terms such as macro cell, small cell, femto cell, pico cell, etc.

A base station can accommodate one or a plurality of (for example, three) cells (also referred to as sectors). When a base station accommodates a plurality of cells, the entire coverage area of the base station can be divided into a plurality of smaller areas, and each smaller area can also provide communication services by a base station subsystem (for example, a Remote Radio Head (RRH) for indoor use).

The term "cell" or "sector" refers to a part or the whole of the coverage area of at least one of the base station and the base station subsystem that performs communication services in this coverage.

In the present disclosure, transmitting information from a base station to a terminal may be read as the base station instructing the terminal to control/operate based on the information.

In the present disclosure, terms such as "Mobile Station (MS)", "user terminal", "User Equipment (UE)", and "terminal" may be used interchangeably.

A mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmitting device, a receiving device, a communication device, or the like. Note that at least one of the base station and the mobile station may be a device mounted on a mobile body, the mobile body itself, or the like. The mobile body may be a vehicle (for example, a car, an airplane, etc.), may be a mobile body that moves unmanned (for example, a drone, an autonomous vehicle, etc.), or may be a robot (manned type or unmanned type). Note that at least one of the base station and the mobile station includes a device that does not necessarily move during communication operation. For example, at least one of the base station and the mobile station may be an Internet of Things (IoT) device such as a sensor.

Also, the base station in the present disclosure may be read as a mobile station (user terminal, hereinafter the same). For example, each aspect/embodiment of the present disclosure may be applied to a configuration in which communication between a base station and a mobile station is replaced with communication between a plurality of mobile stations (for example, may be referred to as Device-to-Device (D2D), Vehicle-to-Everything (V2X), etc.). In this case, the mobile station may have the functions that the base station has. Also, words such as "uplink" and "downlink" may be replaced with words corresponding to inter-terminal communication (for example, "side"). For example, an uplink channel, a downlink channel, etc. may be replaced with a side channel.

Similarly, the mobile station in the present disclosure may be read as a base station. In this case, the base station may have the functions that the mobile station has.

A radio frame may be composed of one or a plurality of frames in the time domain. One or a plurality of frames in the time domain may be referred to as a subframe.

A subframe may be further composed of one or a plurality of slots in the time domain. A subframe may be a fixed time length (for example, 1 ms) independent of numerology.

Numerology may be a communication parameter applied to at least one of transmission and reception of a certain signal or channel. Numerology may indicate at least one of, for example, SubCarrier Spacing (SCS), bandwidth, symbol length, cyclic prefix length, Transmission Time Interval (TTI), number of symbols per TTI, radio frame configuration, specific filtering processing performed by a transceiver in the frequency domain, specific windowing processing performed by a transceiver in the time domain, and the like.

A slot may be composed of one or a plurality of symbols (Orthogonal Frequency Division Multiplexing (OFDM) symbols, Single Carrier Frequency Division Multiple Access (SC-FDMA) symbols, etc.) in the time domain. A slot may be a time unit based on numerology.

A slot may include a plurality of mini-slots. Each mini-slot may be composed of one or a plurality of symbols in the time domain. Also, a mini-slot may be referred to as a sub-slot. A mini-slot may be composed of a smaller number of symbols than a slot. PDSCH (or PUSCH) transmitted in a time unit larger than a mini-slot may be referred to as PDSCH (or PUSCH) mapping type A. PDSCH (or PUSCH) transmitted using a mini-slot may be referred to as PDSCH (or PUSCH) mapping type B.

A radio frame, a subframe, a slot, a mini-slot, and a symbol all represent a time unit when transmitting a signal. A radio frame, a subframe, a slot, a mini-slot, and a symbol may use other names corresponding thereto, respectively.

For example, one subframe may be referred to as a transmission time interval (TTI), a plurality of consecutive subframes may be referred to as a TTI, or one slot or one mini-slot may be referred to as a TTI. That is, at least one of a subframe and a TTI may be a subframe (1 ms) in existing LTE, may be a period shorter than 1 ms (for example, 1-13 symbols), or may be a period longer than 1 ms. Note that the unit representing TTI may be referred to as a slot, a mini-slot, or the like instead of a subframe.

Here, TTI refers to, for example, a minimum time unit of scheduling in radio communication. For example, in an LTE system, a base station performs scheduling to allocate radio resources (frequency bandwidth, transmission power, etc. usable in each user terminal) to each user terminal in units of TTI. Note that the definition of TTI is not limited to this.

TTI may be a transmission time unit of a channel-coded data packet (transport block), a code block, a codeword, etc., or may be a processing unit of scheduling, link adaptation, etc. Note that when a TTI is given, a time section (for example, the number of symbols) in which a transport block, a code block, a codeword, etc. are actually mapped may be shorter than the TTI.

Note that when one slot or one mini-slot is referred to as a TTI, one or more TTIs (that is, one or more slots or one or more mini-slots) may be the minimum time unit of scheduling. Also, the number of slots (number of mini-slots) constituting the minimum time unit of scheduling may be controlled.

A TTI having a time length of 1 ms may be referred to as a normal TTI (TTI in LTE Rel.8-12), a normal TTI, a long TTI, a normal subframe, a normal subframe, a long subframe, a slot, or the like. A TTI shorter than a normal TTI may be referred to as a shortened TTI, a short TTI, a partial or fractional TTI, a shortened subframe, a short subframe, a mini-slot, a sub-slot, a slot, or the like.

Note that a long TTI (for example, a normal TTI, a subframe, etc.) may be replaced with a TTI having a time length exceeding 1 ms, and a short TTI (for example, a shortened TTI, etc.) may be replaced with a TTI having a TTI length less than the TTI length of a long TTI and equal to or greater than 1 ms.

A resource block (RB) is a resource allocation unit in the time domain and the frequency domain, and may include one or a plurality of consecutive subcarriers in the frequency domain. The number of subcarriers included in an RB may be the same regardless of numerology, and may be, for example, 12. The number of subcarriers included in an RB may be determined based on numerology.

Also, the time domain of an RB may include one or a plurality of symbols, and may be the length of one slot, one mini-slot, one subframe, or one TTI. One TTI, one subframe, etc. may be composed of one or a plurality of resource blocks, respectively.

Note that one or a plurality of RBs may be referred to as a Physical RB (PRB), a Sub-Carrier Group (SCG), a Resource Element Group (REG), a PRB pair, an RB pair, or the like.

Also, a resource block may be composed of one or a plurality of resource elements (RE). For example, one RE may be a radio resource region of one subcarrier and one symbol.

A Bandwidth Part (BWP) (may be referred to as a partial bandwidth, etc.) may represent a subset of consecutive common RBs (common resource blocks) for a certain numerology in a certain carrier. Here, a common RB may be identified by an index of an RB based on a common reference point of the carrier. A PRB may be defined in a certain BWP and numbered within the BWP.

BWP may include BWP for UL (UL BWP) and BWP for DL (DL BWP). One or a plurality of BWPs may be configured within one carrier for a UE.

At least one of the configured BWPs may be active, and the UE does not have to assume transmitting or receiving a predetermined signal/channel outside the active BWP. Note that "cell", "carrier", etc. in the present disclosure may be replaced with "BWP".

The structures of the radio frame, subframe, slot, mini-slot, and symbol described above are merely examples. For example, configurations such as the number of subframes included in a radio frame, the number of slots per subframe or radio frame, the number of mini-slots included in a slot, the number of symbols and RBs included in a slot or a mini-slot, the number of subcarriers included in an RB, and the number of symbols, symbol length, Cyclic Prefix (CP) length, etc. in a TTI can be changed variously.

The terms "connected", "coupled", or any variation thereof mean any direct or indirect connection or coupling between two or more elements, and can include the presence of one or more intermediate elements between two elements that are "connected" or "coupled" to each other. Coupling or connection between elements may be physical, logical, or a combination thereof. For example, "connection" may be replaced with "access". As used in the present disclosure, two elements can be considered to be "connected" or "coupled" to each other using at least one of one or more wires, cables, and printed electrical connections, and as some non-limiting and non-inclusive examples, using electromagnetic energy having wavelengths in the radio frequency region, microwave region, and light (both visible and invisible) region, etc.

A reference signal can also be abbreviated as Reference Signal (RS), and may be referred to as a Pilot depending on the standard applied.

The description "based on" used in the present disclosure does not mean "based only on" unless otherwise explicitly stated. In other words, the description "based on" means both "based only on" and "based at least on".

"Means" in the configuration of each device described above may be replaced with "unit", "circuit", "device", etc.

Any reference to elements using designations such as "first", "second", etc. used in the present disclosure does not generally limit the quantity or order of those elements. These designations can be used in the present disclosure as a convenient method for distinguishing between two or more elements. Therefore, references to the first and second elements do not mean that only two elements can be employed there, or that the first element must precede the second element in some way.

In the present disclosure, when "include", "including", and variations thereof are used, these terms are intended to be inclusive, similarly to the term "comprising". Furthermore, the term "or" used in the present disclosure is intended not to be an exclusive OR.

In the present disclosure, for example, when articles such as a, an, and the in English are added by translation, the present disclosure may include that nouns following these articles are plural.

The terms "determining" and "deciding" used in the present disclosure may encompass a wide variety of operations. "Determining" and "deciding" may include, for example, regarding judging, calculating, computing, processing, deriving, investigating, looking up, search, inquiry (for example, search in a table, a database, or another data structure), and ascertaining as "determining" and "deciding". Also, "determining" and "deciding" may include regarding receiving (for example, receiving information), transmitting (for example, transmitting information), input, output, and accessing (for example, accessing data in a memory) as "determining" and "deciding". Also, "determining" and "deciding" may include regarding resolving, selecting, choosing, establishing, comparing, etc. as "determining" and "deciding". That is, "determining" and "deciding" may include regarding some operation as "determining" and "deciding". Also, "determining (deciding)" may be replaced with "assuming", "expecting", "considering", etc.

In the present disclosure, the term "A and B are different" may mean "A and B are different from each other". Note that the term may mean "A and B are different from C, respectively". Terms such as "separate", "coupled", etc. may also be interpreted similarly to "different".

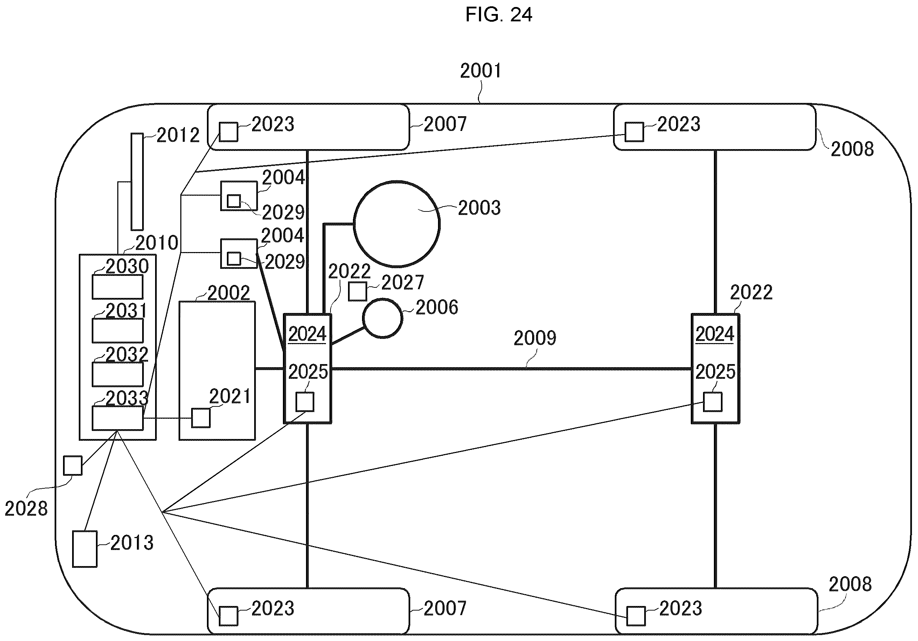

Fig. 24 shows a configuration example of a vehicle 2001. As shown in Fig. 24, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 is composed of, for example, an engine, a motor, or a hybrid of an engine and a motor.

The steering unit 2003 includes at least a steering wheel (also referred to as a handle), and is configured to steer at least one of the front wheels and the rear wheels based on the operation of the steering wheel operated by a user.

The electronic control unit 2010 is composed of a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be referred to as an ECU (Electronic Control Unit).

Signals from the various sensors 2021 to 2028 include a current signal from the current sensor 2021 for sensing the current of the motor, a rotation speed signal of the front wheels or rear wheels acquired by the rotation speed sensor 2022, an air pressure signal of the front wheels or rear wheels acquired by the air pressure sensor 2023, a vehicle speed signal acquired by the vehicle speed sensor 2024, an acceleration signal acquired by the acceleration sensor 2025, a depression amount signal of the accelerator pedal acquired by the accelerator pedal sensor 2029, a depression amount signal of the brake pedal acquired by the brake pedal sensor 2026, an operation signal of the shift lever acquired by the shift lever sensor 2027, a detection signal for detecting an obstacle, a vehicle, a pedestrian, etc. acquired by the object detection sensor 2028, and the like.

The information service unit 2012 is composed of various devices for providing various information such as driving information, traffic information, and entertainment information, such as a car navigation system, an audio system, a speaker, a television, and a radio, and one or more ECUs for controlling these devices. The information service unit 2012 utilizes information acquired from an external device via the communication module 2013 or the like to provide various multimedia information and multimedia services to occupants of the vehicle 1.

The driver assistance system unit 2030 includes various devices for providing functions for preventing accidents in advance and reducing the driving load of a driver, such as a millimeter wave radar, LiDAR (Light Detection and Ranging), a camera, a positioning locator (for example, GNSS, etc.), map information (for example, a high definition (HD) map, an automated vehicle (AV) map, etc.), a gyro system (for example, IMU (Inertial Measurement Unit), INS (Inertial Navigation System), etc.), an AI (Artificial Intelligence) chip, and an AI processor, and one or more ECUs for controlling these devices. Also, the driver assistance system unit 2030 transmits and receives various information via the communication module 2013 to realize a driver assistance function or an automated driving function.

The communication module 2013 can communicate with the microprocessor 2031 and components of the vehicle 1 via the communication port. For example, the communication module 2013 exchanges data with the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and memory (ROM, RAM) 2032 in the electronic control unit 2010, and the sensors 2021 to 2028 provided in the vehicle 2001 via the communication port 2033.

The communication module 2013 is a communication device that is controllable by the microprocessor 2031 of the electronic control unit 2010 and capable of communicating with an external device. For example, it transmits and receives various information to and from an external device via wireless communication. The communication module 2013 may be inside or outside the electronic control unit 2010. The external device may be, for example, a base station, a mobile station, or the like.

The communication module 2013 transmits the current signal from the current sensor input to the electronic control unit 2010 to an external device via wireless communication. Also, the communication module 2013 transmits the rotation speed signal of the front wheels or rear wheels acquired by the rotation speed sensor 2022, the air pressure signal of the front wheels or rear wheels acquired by the air pressure sensor 2023, the vehicle speed signal acquired by the vehicle speed sensor 2024, the acceleration signal acquired by the acceleration sensor 2025, the depression amount signal of the accelerator pedal acquired by the accelerator pedal sensor 2029, the depression amount signal of the brake pedal acquired by the brake pedal sensor 2026, the operation signal of the shift lever acquired by the shift lever sensor 2027, the detection signal for detecting an obstacle, a vehicle, a pedestrian, etc. acquired by the object detection sensor 2028, and the like, which are input to the electronic control unit 2010, to an external device via wireless communication.

The communication module 2013 receives various information (traffic information, signal information, inter-vehicle information, etc.) transmitted from an external device, and displays it on the information service unit 2012 provided in the vehicle. Also, the communication module 2013 stores various information received from an external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, etc. provided in the vehicle 2001.

Although the present disclosure has been described in detail above, it is obvious to those skilled in the art that the present disclosure is not limited to the embodiments described in the present disclosure. The present disclosure can be implemented as modifications and variations without departing from the spirit and scope of the present disclosure defined by the description of the claims. Therefore, the description of the present disclosure is for the purpose of illustration and explanation, and does not have any limiting meaning to the present disclosure.

(Supplementary Note 1)

The above-described disclosure may be expressed as follows.

The first feature is a terminal comprising: a reception unit that receives first information identifying that a target cell is a specific cell belonging to a non-terrestrial network, and second information identifying that the target cell supports sidelink communication; and a control unit that executes specific control regarding the sidelink communication based on the first information and the second information.

The second feature is the terminal according to the first feature, comprising: a transmission unit that transmits at least one of information indicating whether or not to execute the sidelink communication based on the second information, and information indicating whether or not an operation related to simultaneous execution of communication between the specific cell and the terminal and the sidelink communication is possible.

The third feature is the terminal according to the first feature or the second feature, wherein the reception unit receives information indicating whether or not the terminal executing the sidelink communication based on the second information can connect to the specific cell.

The fourth feature is a base station comprising: a transmission unit that transmits first information identifying that a target cell is a specific cell belonging to a non-terrestrial network, and second information identifying that the target cell supports the sidelink communication; and a control unit that assumes that a terminal executes specific control regarding the sidelink communication based on the first information and the second information.

The fifth feature is a radio communication system comprising a terminal and a base station, wherein the terminal comprises: a reception unit that receives first information identifying that a target cell is a specific cell belonging to a non-terrestrial network, and second information identifying that the target cell supports the sidelink communication; and a control unit that executes specific control regarding the sidelink communication based on the first information and the second information.

The sixth feature is a radio communication method comprising: a step A of receiving first information identifying that a target cell is a specific cell belonging to a non-terrestrial network; a step B of receiving second information identifying that the target cell supports the sidelink communication; and a step C of executing specific control regarding the sidelink communication based on the first information and the second information.

(Supplementary Note 2)

The above-described disclosure may be expressed as follows.

The first feature is a terminal comprising: a reception unit that receives information indicating resources for sidelink communication in a specific cell belonging to a non-terrestrial network; and a control unit that executes specific control regarding the sidelink communication when the resources for the sidelink communication are allocated by the specific cell.

The second feature is the terminal according to the first feature, wherein the control unit executes, as the specific control, control of determining a timing to transmit feedback regarding the sidelink communication to the specific cell based on a specific parameter in the specific cell.

The third feature is the terminal according to the first feature or the second feature, wherein the control unit executes, as the specific control, control of reporting a timing advance applied to an uplink signal to the specific cell.

The fourth feature is a base station comprising: a transmission unit that transmits information indicating resources for sidelink communication in a specific cell belonging to a non-terrestrial network; and a control unit that assumes that a terminal executes specific control regarding the sidelink communication when the resources for the sidelink communication are allocated by the specific cell.

The fifth feature is a radio communication system comprising a terminal and a base station, wherein the terminal comprises: a reception unit that receives information indicating resources for sidelink communication in a specific cell belonging to a non-terrestrial network; and a control unit that executes specific control regarding the sidelink communication when the resources for the sidelink communication are allocated by the specific cell.

The sixth feature is a radio communication method comprising: a step A of receiving information indicating resources for sidelink communication in a specific cell belonging to a non-terrestrial network; and a step B of executing specific control regarding the sidelink communication when the resources for the sidelink communication are allocated by the specific cell.

(Supplementary Note 3)

The above-described disclosure may be expressed as follows.

The first feature is a terminal comprising: a communication unit that executes transmission of an uplink signal to a specific cell belonging to a non-terrestrial network and sidelink communication; and a control unit that executes specific control regarding the transmission of the uplink signal and the sidelink communication when autonomously selecting resources for the sidelink communication.

The second feature is the terminal according to the first feature, wherein the control unit executes, as the specific control, control of excluding resources for the sidelink communication that temporally overlap with resources of the uplink signal from candidates for resources for the sidelink communication.

The third feature is the terminal according to the first feature or the second feature, wherein the control unit executes, as the specific control, control of reporting information regarding the sidelink communication.

The fourth feature is a base station comprising: a reception unit that receives an uplink signal to a specific cell belonging to a non-terrestrial network; and a control unit that assumes that a terminal executes specific control regarding transmission of the uplink signal and sidelink communication when the terminal autonomously selects resources for the sidelink communication.

The fifth feature is a radio communication system comprising a terminal and a base station, wherein the terminal comprises: a communication unit that executes transmission of an uplink signal to a specific cell belonging to a non-terrestrial network and sidelink communication; and a control unit that executes specific control regarding the transmission of the uplink signal and the sidelink communication when autonomously selecting resources for the sidelink communication.

The sixth feature is a radio communication method comprising: a step A of executing transmission of an uplink signal to a specific cell belonging to a non-terrestrial network; a step B of executing sidelink communication; and a step C of executing specific control regarding the transmission of the uplink signal and the sidelink communication when autonomously selecting resources for the sidelink communication.

REFERENCE SIGNS LIST

10 RADIO COMMUNICATION SYSTEM
20 NG-RAN
30 CORE NETWORK
100 GNB
100X NTN GATEWAY
110 RECEPTION UNIT
120 TRANSMISSION UNIT
130 CONTROL UNIT
150 SATELLITE

200 UE
210 RADIO SIGNAL TRANSMISSION/RECEPTION UNIT
220 AMPLIFIER UNIT
230 MODULATION/DEMODULATION UNIT
240 CONTROL SIGNAL/REFERENCE SIGNAL PROCESSING UNIT
250 ENCODING/DECODING UNIT
260 DATA TRANSMISSION/RECEPTION UNIT
270 CONTROL UNIT
300 LMF
1001 PROCESSOR
1002 MEMORY
1003 STORAGE
1004 COMMUNICATION DEVICE
1005 INPUT DEVICE
1006 OUTPUT DEVICE
1007 BUS
2001 VEHICLE
2002 DRIVE UNIT
2003 STEERING UNIT
2004 ACCELERATOR PEDAL
2005 BRAKE PEDAL
2006 SHIFT LEVER
2007 LEFT AND RIGHT FRONT WHEELS
2008 LEFT AND RIGHT REAR WHEELS
2009 AXLE
2010 ELECTRONIC CONTROL UNIT
2012 INFORMATION SERVICE UNIT
2013 COMMUNICATION MODULE
2021 CURRENT SENSOR
2022 ROTATION SPEED SENSOR
2023 AIR PRESSURE SENSOR
2024 VEHICLE SPEED SENSOR
2025 ACCELERATION SENSOR
2026 BRAKE PEDAL SENSOR
2027 SHIFT LEVER SENSOR
2028 OBJECT DETECTION SENSOR
2029 ACCELERATOR PEDAL SENSOR
2030 DRIVER ASSISTANCE SYSTEM UNIT
2031 MICROPROCESSOR
2032 MEMORY (ROM, RAM)
2033 COMMUNICATION PORT

**Claims**

1. A terminal comprising:

   a communication unit that executes transmission of an uplink signal to a specific cell belonging to a non-terrestrial network and sidelink communication; and
   a control unit that executes specific control regarding the transmission of the uplink signal and the sidelink communication when autonomously selecting resources for the sidelink communication.

2. The terminal according to claim 1, wherein
   the control unit executes, as the specific control, control of excluding resources for the sidelink communication that temporally overlap with resources of the uplink signal from candidates for resources for the sidelink communication.

3. The terminal according to claim 1, wherein the control unit executes, as the specific control, control of reporting information regarding the sidelink communication.

4. A base station comprising:

   a reception unit that receives an uplink signal to a specific cell belonging to a non-terrestrial network; and
   a control unit that assumes that a terminal executes specific control regarding transmission of the uplink signal and sidelink communication when the terminal autonomously selects resources for the sidelink communication.

5. A radio communication system comprising a terminal and a base station, wherein
   the terminal comprises:

   a communication unit that executes transmission of an uplink signal to a specific cell belonging to a non-terrestrial network and sidelink communication; and
   a control unit that executes specific control regarding the transmission of the uplink signal and the sidelink communication when autonomously selecting resources for the sidelink communication.

6. A radio communication method comprising:

   a step A of executing transmission of an uplink signal to a specific cell belonging to a non-terrestrial network;
   a step B of executing sidelink communication; and
   a step C of executing specific control regarding the transmission of the uplink signal and the sidelink communication when autonomously selecting resources for the sidelink communication.

FIG. 1

EP 4 765 972 A1

FIG. 2

FR1
{15,30,60} kHz SCS
5~100 MHz BW

FR2
{60,120,(240)} kHz SCS
50~400 MHz BW

FR2x

f

0.41 GHz    1 GHz    7.125 GHz    10 GHz    24.25 GHz    52.6 GHz    71 GHz    100 GHz

# FIG. 3

FIG. 4

200

210 RADIO SIGNAL TRANSMISSION/ RECEPTION UNIT

220 AMPLIFIER UNIT

230 MODULATION/ DEMODULATION UNIT

240 CONTROL SIGNAL/ REFERENCE SIGNAL PROCESSING UNIT

250 ENCODING/ DECODING UNIT

260 DATA TRANSMISSION/ RECEPTION UNIT

270 CONTROL UNIT

FIG. 5

FIG. 6

# FIG. 7

RRC/SDAP

PDCP

RLC

MAC

PHY

← NR Uu →

RRC/SDAP

PDCP

RLC

MAC

PHY

EP 4 765 972 A1

FIG. 8

EP 4 765 972 A1

## FIG. 9

S101: RESOURCE SELECTION

S102: PSCCH
S103: PSSCH

S104: HARQ-ACK on PSFCH

200A

200B

S105: HARQ RETRANSMISSION

## FIG. 10

S201: RESOURCE SELECTION

S202: PSCCH
S203: PSSCH

S204: BLIND RETRANSMISSION

200A

200B

## FIG. 11

100

S301: scheduling

S305: HARQ-ACK on PUCCH/PUSCH

S302: PSCCH
S303: PSSCH

S304: HARQ-ACK on PSFCH

200A

200B

EP 4 765 972 A1

FIG. 12

PSFCH#B
S402

200B

Groupcast S401
SL-SCH

PSFCH#C
S402

200A 200C

PSFCH#D
S402

200D

PSCCH

PSSCH

PSFCH

PSFCH#B

PSFCH#C

FREQUENCY

SLOT

SUB-CHANNEL#0

PSFCH#D

SUB-CHANNEL

SUB-CHANNEL#1

SUB-CHANNEL#2

TIME

40

## FIG. 13

**Legend:**

▦ RESOURCE THAT SCI IS DETECTED AND RSRP IS HIGHER THAN THRESHOLD

▒ RESOURCE THAT SCI IS DETECTED AND RSRP IS LOWER THAN THRESHOLD

▨ RESOURCE THAT IS NOT MONITORED (E.G. DUE TO TRANSMISSION)

▓ RESOURCE EXCLUDED

▨ RESOURCE THAT CANDICATE BY RESOURCE RESERVATION FIELD IS EXCLUDED SINCE RESOURCE OF SENSING WINDOW IS NOT MONITORED

◩ RESOURCE NOT EXCLUDED BECAUSE RSRP OF RESOURCE IN SENSING WINDOW IS LOWER THAN THRESHOLD

▤ RESOURCE CANDIDATE

1 CYCLE (10240 ms)

SENSING WINDOW

RESOURCE SELECTION WINDOW

RESOURCE POOL

SUB-CHANNEL

TRANSMISSION OF PRIORITY OF OTHER UE $p_{RX}$

PRIORITY $p_{TX}$

TRIGGER

SLOT

$t_0^{SL}$   $n - T_0$   $t_m^{SL}$   $n - T_{proc,0}$   $n$   $n + T_1$   $n + T_2$   $t_{T_{max}-1}^{SL}$

EP 4 765 972 A1

# FIG. 14

START

S501

START SENSING

S502

IDENTIFY EACH RESOURCE IN RESOURCE SELECTION WINDOW BASED ON SENSING RESULT, DETERMINE SET $S_A$ OF RESOURCE CANDIDATES, AND SELECT RESOURCE USING FOR TARNSMISSION

S503

DETERMINE PREEMPTION FROM SET $S_A$ OF RESOURCE SELECT RESOURCE SET (r_0, r_1, ...)

S504

IDENTIFY EACH RESOURCE IN RESOURCE SELECTION WINDOW BASED ON SENSING RESULT AGAIN AT TIMING $T(r\_0)-T_3$, DETERMINE SET $S_A$ OF RESOURCE CANDIDATES, AND FURTHER DETERMINE PREEMPTION FOR RESOURCE SET (r_0, r_1, ...)

S505

WHEN PREEMPTION IS DETERMINED, NOTIFY PREEMPTION TO UPPER LAYER, PERFORM RESOURCE RESELECTION AT UPPER LAYER, AND FINISH PREEMPTION CHECK

END

# FIG. 15

# FIG. 16

RESOURCE SELECTION WINDOW

RESOURCE POOL

SUB-CHANNEL

TRIGGER

SLOT

$t_0^{SL}$  $n$  $n+T_1$  $t_{y_1}^{SL}$  $t_{y_7}^{SL}$  $n+T_2$  $t_{T_{max}-1}^{SL}$

Y(=7) CANDICATE SLOT

EP 4 765 972 A1

# FIG. 17

FIG. 18

FIG. 19

FIG. 20

EP 4 765 972 A1

FIG. 21

## FIG. 22

FUNCTION ON ——

FUNCTION OFF ·▪▪▪▪

EP 4 765 972 A1

FIG. 23

100, 200

1001
PROCESSOR

1007

1004
COMMUNICATION DEVICE

1002
MEMORY

1005
INPUT DEVICE

1003
STORAGE

1006
OUTPUT DEVICE

FIG. 24

## INTERNATIONAL SEARCH REPORT

| International application No. |
| --- |
| **PCT/JP2023/029477** |

| A. | CLASSIFICATION OF SUBJECT MATTER |
| --- | --- |

*H04W 72/02*(2009.01)i; *H04W 24/10*(2009.01)i; *H04W 72/40*(2023.01)i; *H04W 84/06*(2009.01)i; *H04W 92/18*(2009.01)i
FI: H04W72/02; H04W24/10; H04W72/40; H04W84/06; H04W92/18

According to International Patent Classification (IPC) or to both national classification and IPC

| B. | FIELDS SEARCHED |
| --- | --- |

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023/0171036 A1 (FRAUNHOFER-GESELLSCHAFT ZUR FOERDERUNG DER ANGEWANDTEN FORSCHUNG E.V.) 01 June 2023 (2023-06-01) paragraphs [0437]-[0445], [0763], fig. 17 | 1, 3-6 |
| X | JP 2022-167844 A (NOKIA TECHNOLOGIES OY) 04 November 2022 (2022-11-04) paragraphs [0044]-[0079] | 1, 2, 4-6 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 February 2024** | **12 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

| International application No. |
| --- |
| **PCT/JP2023/029477** |

| Patent document cited in search report | | | Publication date (day/month/year) | Patent family member(s) | | | Publication date (day/month/year) |
| --- | --- | --- | --- | --- | --- | --- | --- |
| US | 2023/0171036 | A1 | 01 June 2023 | JP | 2023-538797 | A | |
| | | | | paragraphs [0157]-[0158], [0287], fig. 17 | | | |
| | | | | WO | 2021/255256 | A1 | |
| | | | | EP | 4169189 | A1 | |
| | | | | KR | 10-2023-0031289 | A | |
| | | | | CN | 116325581 | A | |
| JP | 2022-167844 | A | 04 November 2022 | US | 2022/0361182 | A1 | |
| | | | | paragraphs [0056]-[0093] | | | |
| | | | | EP | 4080954 | A1 | |
| | | | | CN | 115243387 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.211 V17.3.0*, September 2022

- Enhanced support of reduced capability NR devices. *RP-223544, 3GPP TSG RAN Meeting #98-e, 3GPP*, 16 December 2022